# EUROPEAN PATENT APPLICATION

(11) **EP 4 790 532 A1**
(43) Date of publication of application: **12.08.2026**
(21) Application number: 24900871.5
(22) Date of filing: 05.11.2024
(51) Int. Cl.: G06F 3/0484, G06F 1/16, G06F 3/041

(54) **MULTI-FOLDABLE ELECTRONIC DEVICE AND CONTROL METHOD OF SAME MULTI-FOLDABLE ELECTRONIC DEVICE**

(30) Priority: 04.12.2023 KR 20230173736; 09.01.2024 KR 20240003826
(71) Applicant: Samsung Electronics Co., Ltd., Suwon-si, Gyeonggi-do 16677 (KR)
(72) Inventor: WOO, Kwangtaek, Suwon-si, Gyeonggi-do 16677 (KR); KIM, Sangheon, Suwon-si, Gyeonggi-do 16677 (KR); HAN, Yonggil, Suwon-si, Gyeonggi-do 16677 (KR)
(74) Representative: Nederlandsch Octrooibureau
(86) International application number: PCT/KR2024/017261
(87) International publication number: WO 2025/121684

(57) **Abstract**

A multi-foldable electronic device according to various embodiments of the present invention may comprise: a first housing including a first sensor; a second housing foldably coupled to a first side of the first housing and including a second sensor; a third housing foldably coupled to a second side of the first housing and including a third sensor; a first hinge assembly coupled between the first housing and the second housing; a second hinge assembly coupled between the first housing and the third housing; a flexible display including a first display area disposed in the first housing, a second display area disposed in the second housing, and a third display area disposed at the front surface of the third housing; a processor; and a memory storing instructions, wherein in the case where the first housing and the third housing are unfolded using the second hinge assembly, and the first housing and the second housing are folded using the first hinge assembly, the instructions, when executed by the processor, cause the multi-foldable electronic device to: receive a touch input on a first portion of the third display area; after receiving the touch input on the first portion, detect an unfolding movement of the first hinge assembly; and deactivate the touch input on the first portion of the third display area on the basis of the unfolding movement of the first hinge assembly.

## Description

### [Technical Field]

Various embodiments of the disclosure set forth a multi-foldable electronic device including a plurality of hinge assemblies and a method for controlling a touch input of the multi-foldable electronic device.

### [Background Art]

The adoption of foldable electronic devices with horizontal or vertical folding axes is increasing.

The foldable electronic device may be configured such that a first housing and a second housing are folded or unfolded about a hinge assembly.

The foldable electronic device may include a flexible display disposed to extend at least partially across a first housing, a hinge assembly, and a second housing.

The foldable electronic device may provide various types of information, such as text, images, and/or videos, to a user by using a flexible display.

The above information may be provided as background technology for the purpose of facilitating understanding of the disclosure. None of the above should be construed as implying any assertion or determination regarding the application of prior art in relation to the disclosure.

### [Disclosure of Invention]

### [Technical Problem]

Demand from users for foldable electronic devices having an expandable display is increasing. The foldable electronic device may be implemented in the form of a multi-foldable electronic device including a first housing, a second housing, and a third housing.

The multi-foldable electronic device may include a flexible display disposed to extend at least partially across the first housing, the second housing, and the third housing.

The multi-foldable electronic may be configured such that the first housing, the second housing, and the third housing are folded in an in-folding manner and/or an out-folding manner using a first hinge assembly and a second hinge assembly.

The multi-foldable electronic device may be configured such that, for example, the second housing is folded first with respect to the first housing, which is disposed in the middle, and the third housing is folded later.

The multi-foldable electronic device may be configured such that, for example, the first housing and the third housing are unfolded using the second hinge assembly, and the first housing and the second housing are folded using the first hinge assembly. For example, when a user touches a portion of a third display area of the flexible display disposed on the third housing in order to unfold the second housing that is folded with respect to the first housing, an application execution screen that is not intended by the user may be displayed on the third display area.

Various embodiments of the disclosure may provide a multi-foldable electronic device capable of ignoring a touch input that is generated when the second housing or the third housing is unfolded or folded, and a method for controlling the multi-foldable electronic device.

The technical problems to be achieved by the disclosure are not limited to the technical problems described above, and other technical problems not mentioned above will be clearly understood by those skilled in the art from the following description.

### [Solution to Problem]

According to an embodiment of the disclosure, a multi-foldable electronic device may include a first housing including a first sensor, a second housing foldably coupled to a first side of the first housing and including a second sensor, a third housing foldably coupled to a second side of the first housing and including a third sensor, a first hinge assembly coupled between the first housing and the second housing, a second hinge assembly coupled between the first housing and the third housing, a flexible display including a first display area disposed on the first housing, a second display area disposed on the second housing, and a third display area disposed on a front surface of the third housing, a processor, and a memory configured to store instructions. According to an embodiment, in case that the first housing and the third housing are unfolded using the second hinge assembly, and the first housing and the second housing are folded using the first hinge assembly, the instructions, when executed by the processor, may cause the multi-foldable electronic device to receive a touch input on a first portion of the third display area, detect an unfolding movement of the first hinge assembly after receiving the touch input on the first portion, and deactivate the touch input on the first portion of the third display area, based on the unfolding movement of the first hinge assembly.

A control method of a multi-foldable electronic device according to an embodiment of the disclosure may include detecting, by the multi-foldable electronic device using a first sensor and/or a third sensor, that a first housing and a third housing are unfolded using a second hinge assembly. According to an embodiment, the method may include detecting, using the first sensor and/or the second sensor, that the first housing and the second housing are folded using the first hinge assembly. According to an embodiment, the method may include receiving a touch input on a first portion of the third display area of the flexible display to unfold the second housing from the first housing. According to an embodiment, the method may include, after receiving the touch input on the first portion, detecting an unfolding movement of the first hinge assembly. According to an embodiment, the method may include deactivating the touch input on the first portion of the third display area, based on the unfolding movement of the first hinge assembly.

According to an embodiment, the control method of a multi-foldable electronic device may be performed using a non-transitory computer-readable storage medium storing one or more programs. The one or more programs according to an embodiment may include instructions and/or commands to be executed by the processor of a multi-foldable electronic device.

### [Advantageous Effects of Invention]

According to various embodiments of the disclosure, execution of an application unintended by a user may be prevented by ignoring touch inputs on a portion of the display area that occurs when one or more housings of a multi-foldable electronic device are unfolded or folded.

In addition to the above, various other effects that can be directly or indirectly identified through the disclosure may be provided.

### [Brief Description of Drawings]

With regard to the description of the drawings, the same or similar reference numerals may be used for the same or similar elements.
FIG. 1A is a block diagram of an electronic device in a network environment according to various embodiments of the disclosure.
FIG. 1B is a block diagram of a display module according to various embodiments of the disclosure.
FIG. 2A is a schematic drawing of a multi-foldable electronic device in an unfolded state, as viewed from the front, according to an embodiment of the disclosure.
FIG. 2B is a schematic diagram of a multi-foldable electronic device in an unfolded state, as viewed from the rear, according to an embodiment of the disclosure.
FIG. 3 is a schematic diagram of a multi-foldable electronic device according to an embodiment of the disclosure, illustrating a state in which a first housing and a second housing are folded and the first housing and a third housing are unfolded.
FIGS. 4A and 4B are schematic diagrams of a multi-foldable electronic device according to an embodiment of the disclosure, illustrating a state in which a first housing, a second housing, and a third housing are folded.
FIG. 5 is a schematic diagram of a multi-foldable electronic device, as viewed from the rear, according to an embodiment of the disclosure, illustrating a state in which some components are removed.
FIG. 6 is a schematic block diagram illustrating a configuration of a multi-foldable electronic device according to an embodiment of the disclosure.
FIG. 7 is a schematic diagram of a multi-foldable electronic device in a folded state according to an embodiment of the disclosure.
FIG. 8 is a schematic diagram of a multi-foldable electronic device according to an embodiment of the disclosure, illustrating a state in which a first housing and a third housing are unfolded and the first housing and a second housing are folded.
FIG. 9 is a schematic diagram of a multi-foldable electronic device according to an embodiment of the disclosure, illustrating unfolding of a second housing from a first housing in a state in which the first housing and a third housing are unfolded and the first housing and the second housing are folded.
FIG. 10 is a schematic diagram of a multi-foldable electronic device according to an embodiment of the disclosure, illustrating folding of a second housing toward a first housing in a state in which the first housing and a third housing are unfolded and the first housing and the second housing are unfolded.
FIG. 11 is a schematic diagram of a multi-foldable electronic device according to an embodiment of the disclosure, illustrating unfolding of a third housing from a first housing in a state in which the first housing and a second housing are unfolded and the first housing and the third housing are folded.
FIG. 12 is a flowchart illustrating a method for controlling a touch input of a multi-foldable electronic device according to an embodiment of the disclosure.
FIG. 13 is a flowchart illustrating a method for controlling a touch input of a multi-foldable electronic device according to various embodiments of the disclosure.

### [Mode for the Invention]

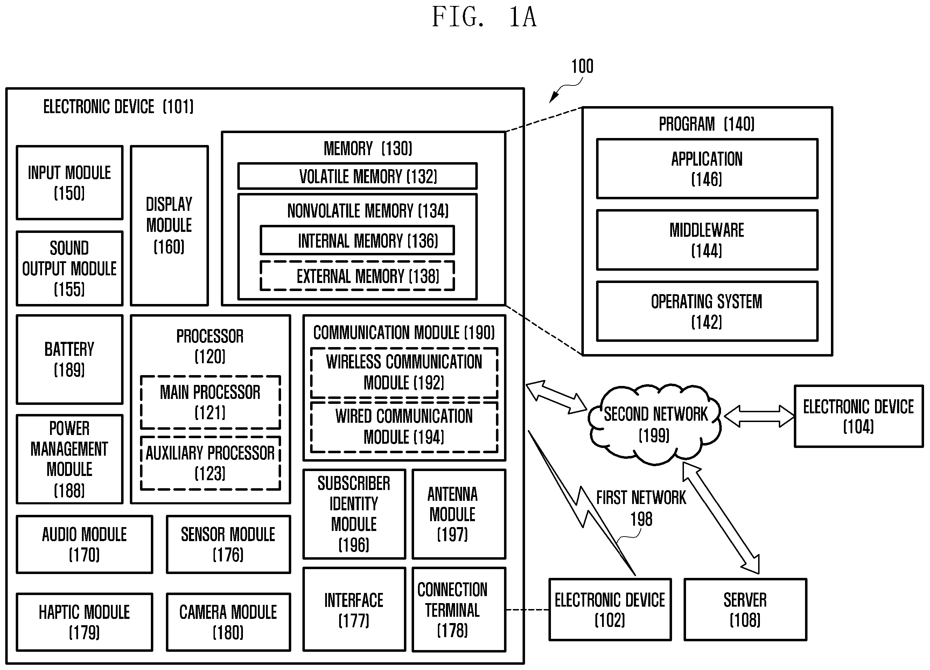

FIG. 1A is a block diagram illustrating an electronic device 101 in a network environment 100 according to various embodiments.

Referring to FIG. 1A, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121..

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

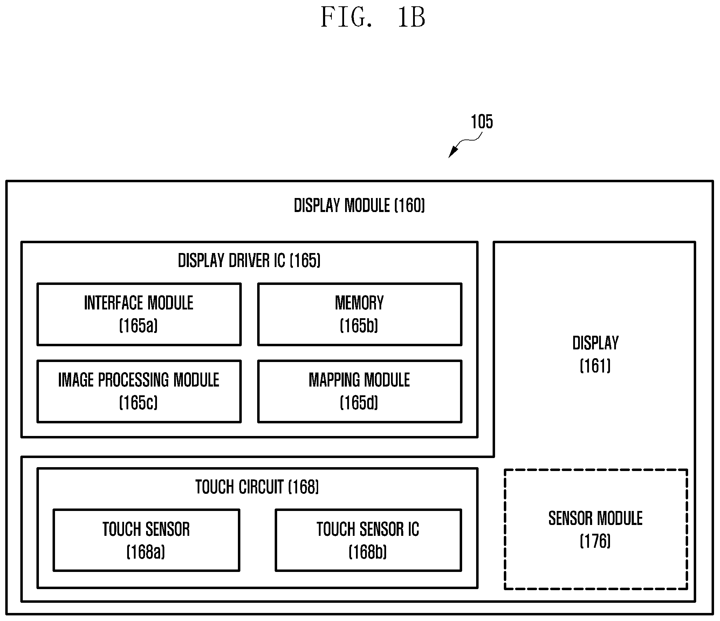

Fig. 1B is a block diagram 105 illustrating the display module 160 according to various embodiments.

Referring to Fig. 1B, the display module 160 may include a display 161 and a display driver integrated circuit (DDI) 165 to control the display 161. The DDI 165 may include an interface module 165a, memory 165b (e.g., buffer memory), an image processing module 165c, or a mapping module 165d. The DDI 165 may receive image information that contains image data or an image control signal corresponding to a command to control the image data from another component of the electronic device 101 via the interface module 165a. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 165 may communicate, for example, with touch circuitry 168 or the sensor module 176 via the interface module 165a. The DDI 165 may also store at least part of the received image information in the memory 165b, for example, on a frame by frame basis. The image processing module 165c may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 161. The mapping module 165d may generate a voltage value or a current value corresponding to the image data pre-processed or post-processed by the image processing module 165c. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 161 may be driven, for example, based at least in part on the voltage value or the current value such that visual information (e.g., a text, an image, or an icon) corresponding to the image data may be displayed via the display 161.

According to an embodiment, the display module 160 may further include the touch circuitry 168. The touch circuitry 168 may include a touch sensor 168a and a touch sensor IC 168b to control the touch sensor 168a. The touch sensor IC 168b may control the touch sensor 168a to sense a touch input or a hovering input with respect to a certain position on the display 161. To achieve this, for example, the touch sensor 168a may detect (e.g., measure) a change in a signal (e.g., a voltage, a quantity of light, a resistance, or a quantity of one or more electric charges) corresponding to the certain position on the display 161. The touch circuitry 168 may provide input information (e.g., a position, an area, a pressure, or a time) indicative of the touch input or the hovering input detected via the touch sensor 168a to the processor 120. According to an embodiment, at least part (e.g., the touch sensor IC 168b) of the touch circuitry 168 may be formed as part of the display 161 or the DDI 165, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 161, the DDI 165, or the touch circuitry 168)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 161. As another example, when the sensor module 176 embedded in the display module 160 includes a pressure sensor, the pressure sensor may obtain pressure information corresponding to a touch input received via a partial or whole area of the display 161. According to an embodiment, the touch sensor 168a or the sensor module 176 may be disposed between pixels in a pixel layer of the display 161, or over or under the pixel layer.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that the embodiments and the terms used therein are not intended to limit the technological features set forth herein to particular embodiments and the disclosure includes various changes, equivalents, and/or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

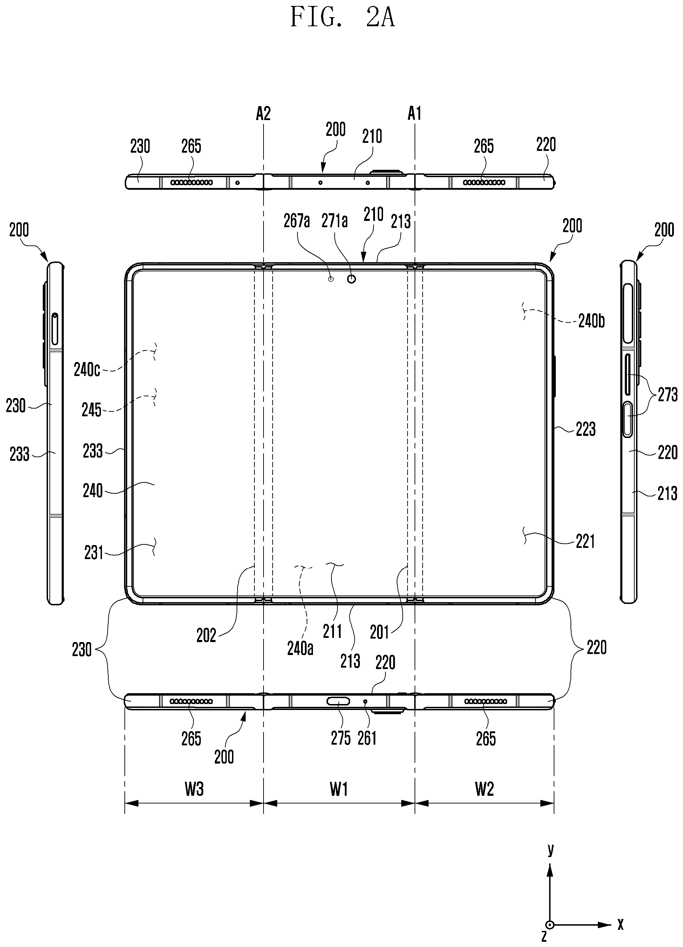

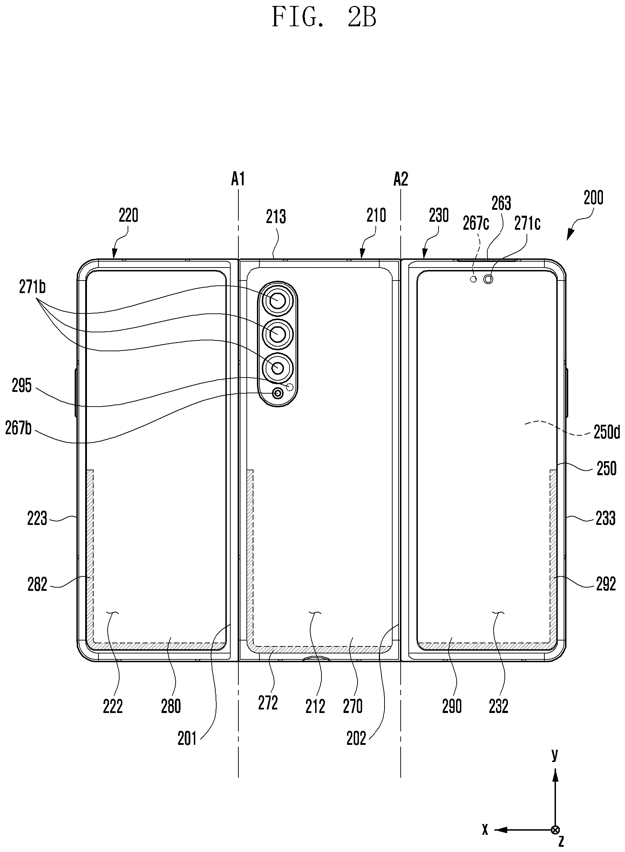

FIG. 2A is a schematic drawing of a multi-foldable electronic device in an unfolded state, as viewed from the front, according to an embodiment of the disclosure. FIG. 2B is a schematic diagram of a multi-foldable electronic device in an unfolded state, as viewed from the rear, according to an embodiment of the disclosure.

According to various embodiments, the embodiments of the electronic device 101 disclosed in FIGS. 1A and 1B may be included in the embodiments of the multi-foldable electronic device 200 disclosed below. For example, the multi-foldable electronic device 200 disclosed in FIGS. 2A and 2B may include a processor 120, a memory 130, an input module 150, a sound output module 155, a display module 160, an audio module 170, a sensor module 176, an interface 177, a connection terminal 178, a haptic module 179, a camera module 180, an antenna module 197, and/or subscriber identification module 196 disclosed in FIGS. 1A and 1B.

Referring to FIGS. 2A and 2B, the multi-foldable electronic device 200 according to an embodiment of the disclosure may include a first housing 210, a second housing 220, a third housing 230, a first hinge assembly 201 (e.g., a first hinge module), a second hinge assembly 202 (e.g., a second hinge module), and/or a flexible display 240.

According to an embodiment, the first housing 210 may be disposed between the second housing 220 and the third housing 230. The second housing 220 may be coupled to the first side (e.g., the x-axis direction) of the first housing 210 to be foldable and unfoldable. The third housing 230 may be coupled to the second side (e.g., the -x-axis direction) of the first housing 210 so as to be foldable and unfoldable. For example, the first housing 210 may have a first side (e.g., the x-axis direction) operatively coupled to at least a portion of the second housing 220 through the first hinge assembly 201, and a second side (e.g., the -x-axis direction) operatively coupled to at least a portion of the third housing 230 through the second hinge assembly 202.

According to an embodiment, the second housing 220 may be foldably coupled to the first side (e.g., the x-axis direction) of the first housing 210. The first hinge assembly 201 may be coupled between the first housing 210 and the second housing 220. The first hinge assembly 201 may be disposed such that the first housing 210 and the second housing 220 are capable of being folded or unfolded with respect to each other. The first hinge assembly 201 may include a hinge device, a hinge member, a hinge plate, a hinge structure, or a hinge module. The first housing 210 and the second housing 220 may be coupled to be rotatable with respect to the first folding axis A1 using the first hinge assembly 201.

According to an embodiment, the third housing 230 may be foldably coupled to the second side (e.g., the -x-axis direction) of the first housing 210. The second hinge assembly 202 may be coupled between the first housing 210 and the third housing 230. The second hinge assembly 202 may be disposed so that the first housing 210 and the third housing 230 can be folded or unfolded with respect to each other. The second hinge assembly 202 may include a hinge device, a hinge member, a hinge plate, a hinge structure, or a hinge module. The first housing 210 and the third housing 230 may be coupled to be rotatable with respect to the second folding axis A2 using the second hinge assembly 202.

According to an embodiment, the multi-foldable electronic device 200 may first fold the second housing 220 with respect to the first housing 210 through the first hinge assembly 201, and then fold the third housing 230 with respect to the first housing 210 through the second hinge assembly 202. For example, the second housing 220 may be folded with respect to the first housing 210 in an in-folding manner through the first hinge assembly 201. For example, the second housing 220 may be folded onto the first housing 210 while rotating in the z-axis direction and the -x-axis direction through the first hinge assembly 201. For example, the third housing 230 may be folded with respect to the first housing 210 in an in-folding manner through the second hinge assembly 202. For example, the third housing 230 may be folded with respect to the first housing 210 while rotating in the z-axis and x-axis directions through the second hinge assembly 202.

According to an embodiment, the width W2 of the second housing 220 in the horizontal direction (e.g., the x-axis and -x-axis directions) may be configured to be smaller than the width W1 of the first housing 210 in the horizontal direction (e.g., the x-axis and -x-axis directions). The width W1 of the first housing 210 in the horizontal direction (e.g., the x-axis and -x-axis direction) may be configured to be substantially the same as the width W3 of the third housing 230 in the horizontal direction (e.g., the x-axis and -x-axis direction). According to various embodiments, the width W3 of the third housing 230 in the horizontal direction (e.g., the x-axis and -x-axis directions) may be configured to be greater or smaller than the width W1 of the first housing 210 in the horizontal direction (e.g., the x-axis and -x-axis directions).

According to an embodiment, the first housing 210 and the second housing 220 may be disposed at opposite sides with respect to a first folding axis A1 on which the first hinge assembly 201 is disposed, and may have shapes that are asymmetric with respect to the first folding axis A1. According to various embodiments, the first housing 210 and the second housing 220 may have a symmetrical shape with respect to the first folding axis A1. The angle and distance between the first housing 210 and the second housing 220 may vary depending on whether the multi-foldable electronic device 200 is in the unfolded state, the folded state, or the intermediate state.

According to an embodiment, the first housing 210 and the third housing 230 may be disposed at opposite sides with respect to a second folding axis A2 on which the second hinge assembly 202 is disposed and may have shapes that are substantially symmetrical with respect to the second folding axis A2. According to various embodiments, the first housing 210 and the third housing 230 may have shapes that are asymmetrical with respect to the second folding axis A2. The angle or distance between the first housing 210 and the third housing 230 may vary depending on whether the multi-foldable electronic device 200 is in an unfolded state, a folded state, or an intermediate state.

According to an embodiment, the width of the second hinge assembly 202 may be configured to be greater than the width of the first hinge assembly 201. For example, in case that the second housing 220 is first folded with respect to the first housing 210, and then the third housing 230 is folded with respect to the first housing 210 such that the third housing 230 is disposed above the second housing 220, the width of the second hinge assembly 202 may be configured to be greater than the width of the first hinge assembly 201. For example, the first hinge assembly 201 may be a first in-folding hinge, a slim hinge, or a small hinge with a smaller width than the second hinge assembly 202. For example, the second hinge assembly 202 may be a second in-folding hinge, a wide hinge, or a big hinge having a greater width than the first hinge assembly 201. For example, the second hinge assembly 202 may have a greater radius of curvature than the first hinge assembly 202. The first hinge assembly 201 may have a smaller radius of curvature than the second hinge assembly 202. In an embodiment, the width of the second hinge assembly 202 is described as being greater than a width of a first hinge assembly 201. However, the disclosure is not limited thereto, and a width of the first hinge assembly 201 may be greater than a width of the second hinge assembly 202 depending on a type and/or an operation of a multi-foldable electronic device 200.

According to an embodiment, the flexible display 240 may be disposed on the first housing 210, the second housing 220, and the third housing 230. For example, the flexible display 240 may be disposed to extend across at least a portion of each of front surfaces (e.g., the z-axis direction) of a first housing 210, a second housing 220, and a third housing 230. The flexible display 240 may be a first display, a foldable display, or a main display. According to various embodiments, a sub-display 250 may be disposed on the rear surface of the third housing 230 (e.g., the -z-axis direction). The sub-display 250 may be a second display or an auxiliary display. The flexible display 240 and/or the sub-display 250 may include the display module 160 disclosed in FIGS. 1A and 1B. The flexible display 240 and/or the sub-display 250 may include at least some embodiments related to the display module 160 disclosed in FIGS. 1A and 1B.

In the document, the surface on which the flexible display 240 (e.g., the display module 160 in FIGS. 1A and 1B) is disposed may be defined as the front surface (e.g., the z-axis direction) of the multi-foldable electronic device 200, and the surface opposite to the front surface may be defined as the rear surface (e.g., the -z-axis direction) of the multi-foldable electronic device 200. The surface that surrounds the space between the front surface (e.g., the z-axis direction) and the rear surface (e.g., the -z-axis direction) may be defined as the lateral surface of the multi-foldable electronic device 200.

According to an embodiment, the flexible display 240 may include a first display area 240a disposed on the first housing 210, a second display area 240b disposed on the second housing 220, and a third display area 240c disposed on the third housing 230 (e.g., on the front surface). The first display area 240a, the second display area 240b, and the third display area 240c may be integrally formed to configure the flexible display 240. According to various embodiments, when the multi-foldable electronic device 200 is in the unfolded state, the flexible display 240 may be configured to be disposed on most of the front surface (e.g., the z-axis direction) of the multi-foldable electronic device 200. The flexible display 240 may have at least some areas that can be deformed into a flat or curved surface. The division of the flexible display 240 into the first display area 240a, the second display area 240b, and the third display area 240c may be an exemplary physical division. The flexible display 240 may be formed as a single seamless full screen. According to an embodiment, the sub-display 250 may include a fourth display area 250d. For example, the sub-display 250 may be disposed on the rear surface (e.g., the -z-axis direction) of the third housing 230.

According to an embodiment, in the unfolded state of the multi-foldable electronic device 200, the first housing 210 may include a first surface 211 connected to at least a portion of the first hinge assembly 201 and at least a portion of the second hinge assembly 202 and disposed to face the front surface (e.g., the z-axis direction) of the multi-foldable electronic device 200, a second surface 212 facing the opposite direction of the first surface 211, and/or a first lateral member 213 that surrounds at least a portion of the first space between the first surface 211 and the second surface 212.

According to an embodiment, in the unfolded state of the multi-foldable electronic device 200, the second housing 220 may include a third surface 221 that is connected to at least a portion of the first hinge assembly 201 and is disposed to face the front surface (e.g., the z-axis direction) of the multi-foldable electronic device 200, a fourth surface 222 facing the opposite direction of the third surface 221, and/or a second lateral member 223 that surrounds at least a portion of a second space between the third surface 221 and the fourth surface 222.

According to an embodiment, in the unfolded state of the multi-foldable electronic device 200, the third housing 230 may include a fifth surface 231 connected to at least a portion of the second hinge assembly 202 and disposed to face the front (e.g., the z-axis direction) of the multi-foldable electronic device 200, a sixth surface 232 facing the opposite direction of the fifth surface 231, and/or a third lateral member 233 surrounding at least a portion of a third space between the fifth surface 231 and the sixth surface 232.

According to various embodiments, in the unfolded state of the multi-foldable electronic device 200, the first surface 211, the third surface 221, and the fifth surface 231 may face a substantially identical direction (e.g., the z-axis direction). In the unfolded state of the multi-foldable electronic device 200, the second surface 212, the fourth surface 222, and the sixth surface 232 may face substantially the same direction (e.g., the -z-axis direction).

According to various embodiments, in a folded state of the first housing 210 and the second housing 220 of a multi-foldable electronic device 200, the first surface 211 and the third surface 221 may be disposed to face each other. In the multi-foldable electronic device 200, when the third housing 230 is disposed above (e.g., the z-axis direction) the second housing 220 while the third housing 230 is folded with respect to the first housing 210, the fourth surface 222 of the second housing 220 and the fifth surface 231 of the third housing 230 may be disposed to face each other.

According to various embodiments, the multi-foldable electronic device 200 may include a recess 245 configured to accommodate the flexible display 240 through the structural coupling of the first housing 210, the second housing 220, and the third housing 230. The recess 245 may have a size substantially the same as that of the flexible display 240.

According to various embodiments, when a multi-foldable electronic device 200 is in an unfolded state, the first housing 210, the second housing 220, and the third housing 230 may form an angle of about 180°, and the first display area 240a, the second display area 240b, and the third display area 240c of a flexible display 240 may substantially lie in the same plane and may be disposed to face substantially the same direction (e.g., the z-axis direction). The fourth display area 250d of the sub-display 250 may be disposed to face a direction opposite to the third display area 240c.

According to various embodiments, when the multi-foldable electronic device 200 is in a fully unfolded state, the first housing 210, the second housing 220, and the third housing 230 may form an angle of about 175° to about 185°. For example, when the multi-foldable electronic device 200 is in a partially unfolded state, an angle of about 10° to about 175° may be formed between the first housing 210, the second housing 220, and the third housing 230. For example, when the multi-foldable electronic device 200 is in a folded state, an angle of about 0° to about 10° may be formed between the first housing 210, the second housing 220, and the third housing 230.

According to various embodiments, an unfolded state of the multi-foldable electronic device 200 may be defined by expressions such as an "open state" or an "unfolded state," a fully unfolded state of the multi-foldable electronic device 200 may be defined by expressions such as a "fully open state" or a "fully unfolded state," a partially unfolded state of the multi-foldable electronic device 200 may be defined by expressions such as an "intermediate state," a "partially open state," or a "partially folded state," and a folded state of the multi-foldable electronic device 200 may be defined by expressions such as a "closed state" or a "folded state."

According to various embodiments, the first housing 210 and the second housing 220 may, by using the first hinge assembly 201, form a designated folding angle between the folded state and the unfolded state, at which the first housing 210 and the second housing 220 may be stopped (e.g., a free-stop function). In various embodiments, the second housing 220 may, by using the first hinge assembly 201, rotate to move toward the second surface 212 (e.g., the rear surface) of the first housing 210 while being pressed in an unfolding direction (e.g., the -z-axis direction) with respect to a designated bending angle.

According to various embodiments, the first housing 210 and the third housing 230 may, by using the second hinge assembly 202, form a designated folding angle between the folded state and the unfolded state, at which the first housing 210 and the third housing 230 may be stopped. In various embodiments, the third housing 230 may, by using the second hinge assembly 202, rotate to move toward the second surface 212 (e.g., a rear surface) of the first housing 210 while being pressed in an unfolding direction (e.g., the -z-axis direction) with respect to a designated bending angle.

According to various embodiments, the flexible display 240 may be disposed to be supported by the first surface 211 of the first housing 210, the first hinge assembly 201, the third surface 221 of the second housing 220, the second hinge assembly 202, and the fifth surface 231 of the third housing 230. In an embodiment, the sub-display 250 (e.g., the fourth display area 250d) may be disposed to be at least partially visible from outside through the sixth surface 232 in the inner space of the third housing 230. In various embodiments, the sub-display 250 may be disposed to be visible from outside through the fourth surface 222 in the inner space of the second housing 220.

According to an embodiment, the flexible display 240 may be mainly used when the multi-foldable electronic device 200 is in an unfolded state, and the sub-display 250 may be mainly used when the multi-foldable electronic device 200 is in a folded state.

According to an embodiment, the multi-foldable electronic device 200 may include a first rear cover 270 disposed on the second surface 212 of the first housing 210, a second rear cover 280 disposed on the fourth surface 222 of the second housing 220, and/or a third rear cover 290 disposed on the sixth surface 232 of the third housing 230. In various embodiments, at least a portion of the first rear cover 270 may be integrally formed with a portion of the first lateral member 213. In various embodiments, at least a portion of the second rear cover 280 may be integrally formed with a portion of the second lateral member 223. In various embodiments, at least a portion of the third rear cover 290 may be integrally formed with a portion of the third lateral member 233. According to an embodiment, at least one of the first rear cover 270, the second rear cover 280, and the third rear cover 290 may be formed of a substantially transparent plate (e.g., a glass plate including various coating layers, or a polymer plate) or an opaque plate.

According to various embodiments, the first rear cover 270 may be formed of an opaque plate made of, for example, coated or colored glass, ceramic, polymer, metal (e.g., aluminum, stainless steel (STS), or magnesium), or a combination of at least two of the foregoing materials. According to various embodiments, the second rear cover 280 may be formed of an opaque plate made of, for example, coated or colored glass, ceramic, polymer, metal (e.g., aluminum, stainless steel (STS), or magnesium), or a combination of at least two of the foregoing materials. According to various embodiments, the third rear cover 290 may be formed of a substantially transparent plate, such as glass or polymer. The sub-display 250 (e.g., the fourth display area 250d) may be disposed within the inner space of the third housing 230 to be visible from outside through the third rear cover 290.

According to an embodiment, the multi-foldable electronic device 200 may include a first grip sensor 272, a second grip sensor 282, and/or a third grip sensor 292.

According to an embodiment, the first grip sensor 272 may be disposed in the first housing 210. The first grip sensor 272 may detect whether a user of the multi-foldable electronic device 200 grips at least a portion of the first housing 210 using his/her hand (e.g., a palm and/or fingers). For example, the second grip sensor 282 may be disposed in the second housing 220. The second grip sensor 282 may detect whether the user grips at least a portion of the second housing 220 using his/her hand. For example, the third grip sensor 292 may be disposed in the third housing 230. The third grip sensor 292 may detect whether the user grips at least a portion of the third housing 230 using his/her hand.

According to various embodiments, functions and operations of the first grip sensor 272, the second grip sensor 282, and/or the third grip sensor 292 described above may be performed using a touch circuit (e.g., the touch circuit 168 of FIG. 1B) of the flexible display 240 and/or the sub-display 250. For example, the flexible display 240 may detect whether a user grips the first housing 210 (e.g., the first display area 240a), the second housing 220 (e.g., the second display area 240b), and the third housing 230 (e.g., the third display area 240c and/or the fourth display area 250d) using the touch circuit (e.g., the touch circuit 168 of FIG. 1B).

According to various embodiments, the multi-foldable electronic device 200 may include at least one of an input module 261, an audio output module 263, 265, a sensor module 267a, 267b, 267c, a camera modules 271a, 271b, 271c, a key input device 273, an indicator (not shown), or a connector port 275. In various embodiments, the multi-foldable electronic device 200 may omit at least one of the components described above or may additionally include at least one other component.

According to an embodiment, the input module 261 may include at least one microphone disposed to detect a direction of sound. The input module 261 may include the input module 150 disclosed in FIG. 1A.

According to an embodiment, the audio output module 263, 265 may include at least one speaker. The audio output module 263, 265 may include a call receiver 263 disposed through the sixth surface 232 of the third housing 230, and a speaker 265 disposed on at least a portion of an upper side (e.g., the y-axis direction) and/or a lower side (e.g., the -y-axis direction) of the second lateral member 223 of the second housing 220 and/or at least a portion of an upper side (e.g., the y-axis direction) and/or a lower side (e.g., the -y-axis direction) of the third lateral member 233 of the third housing 230. The audio output module 263, 265 may include the audio output module 155 disclosed in FIG. 1A.

According to an embodiment, the input module 261, the sound output module 263, 265, and the connector port 275 may be disposed in the spaces of the first housing 210, the second housing 220, and/or the third housing 230, and may be exposed to the external environment through at least one hole disposed in the first housing 210, the second housing 220, and/or the third housing 230. In an embodiment, the holes formed in the first housing 210, the second housing 220, and/or the third housing 230 may be used in common for the input module 261 and the sound output modules 263 and 265. In an embodiment, the sound output module 263 or 265 may include a speaker (e.g., a piezoelectric speaker) that operates without a hole disposed in the second housing 220 and/or the third housing 230.

According to various embodiments, the camera module 271a, 271b, 271c may include a first camera module 271a disposed on the first surface 211 of the first housing 210, a second camera module 271b disposed on the second surface 212 of the first housing 210, and/or a third camera module 271c disposed on the sixth surface 232 of the third housing 230. According to an embodiment, the multi-foldable electronic device 200 may include a flash 295 disposed near the second camera module 271b. The flash 295 may include, for example, a light-emitting diode or a xenon lamp. According to an embodiment, the camera modules 271a, 271b, 271c may include one or more lenses, an image sensor, and/or an image signal processor. In an embodiment, at least one of the camera modules 271a, 271b, 271c may include two or more lenses (e.g., wide-angle and telephoto lenses) and image sensors and may be collectively disposed on one of the surfaces of the first housing 210, the second housing 220, and/or the third housing 230. For example, the camera module 271a, 271b, 271c may include the camera module 180 disclosed in FIG. 1A.

According to an embodiment, the sensor module 267a, 267b, 267c may generate an electrical signal or a data value to an internal operating state or an external environmental state of a multi-foldable electronic device 200. According to various embodiments, the sensor module 267a, 267b, 267c may include a first sensor module 267a disposed on the first surface 211 of the first housing 210, a second sensor module 267b disposed on the second surface 212 of the first housing 210, and/or a third sensor module 267c disposed on the sixth surface 232 of the third housing 230. For example, the sensor module 267a, 267b, 267c may include the sensor module 176 disclosed in FIG. 1A.

According to various embodiments, the multi-foldable electronic device 200 may further include at least one sensor module not illustrated, for example, a 6-axis sensor (e.g., an acceleration sensor and a gyro sensor), an angle sensor, a Hall sensor, an angular velocity sensor, a folding and unfolding detection sensor, a proximity sensor, a barometric pressure sensor, a magnetic sensor, a biometric sensor, a temperature sensor, a humidity sensor, a gesture sensor, a grip sensor, a color sensor, an infrared (IR) sensor, an illuminance sensor, an ultrasonic sensor, an iris recognition sensor, a distance detection sensor (e.g., a time of flight (TOF) sensor or light detection and ranging (LiDAR)), and a fingerprint recognition sensor.

According to an embodiment, the key input device 273 may be disposed to be exposed to an outside through the second lateral member 223 of the second housing 220. In an embodiment, the key input device 273 may be disposed to be exposed to the outside through the third lateral member 233 of the third housing 230. In an embodiment, the multi-foldable electronic device 200 may not include some or all of key input devices 273, and the key input device 273 that is not included may be implemented in another form, such as a soft key, on the flexible display 240 and/or the sub-display 250. In various embodiments, the key input device 273 may be implemented using a touch sensor (e.g., the touch sensor 168a of FIG. 1B) and/or a pressure sensor included in the flexible display 240 and/or the sub-display 250. In an embodiment, the key input device 273 may include a power button and/or a volume control button of the multi-foldable electronic device 200.

According to an embodiment, the connector port 275 may include a connector (e.g., a USB connector or an interface connector port module (IF module)) for transmitting and/or receiving power and/or data to and from an external electronic device (e.g., the external electronic devices 102, 104, and 108 of FIG. 1A). In an embodiment, the connector port 275 may also perform a function of transmitting and/or receiving an audio signal to and/or from an external electronic device, or may further include a separate connector port (e.g., an ear jack hole) for transmitting and/or receiving an audio signal. For example, the connector port 275 may be disposed in a portion of the first lateral member 213 of the first housing 210. For example, the connector port 275 may include the connection terminal 178 disclosed in FIG. 1A.

According to various embodiments, at least one camera module 271a, 271c among the camera modules 271a, 271b, 271c, at least one sensor module 267a, 267c among the sensor modules 267a, 267b, 267c, and/or an indicator may be disposed to be exposed through at least one display 240, 250. For example, at least one camera module 271a, 271c, at least one sensor module 267a, 267c, and/or an indicator may be disposed below an activation area (display area) of at least one display 240, 250 within the inner space of at least one housing 210, 220, 230, and may be disposed to contact an external environment through an opening or a transparent area disposed through a cover member (e.g., a window layer (not shown) of the flexible display 240 and/or the third rear cover 290).

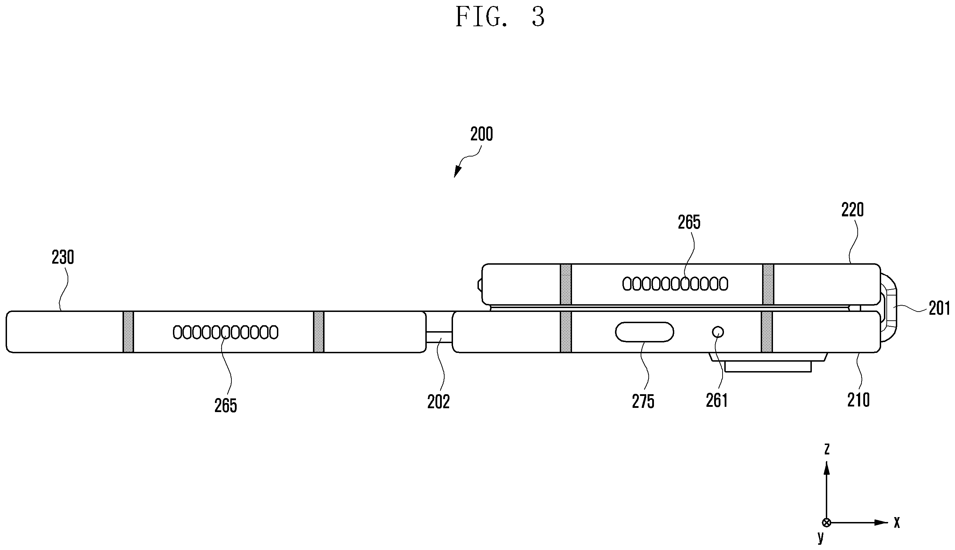

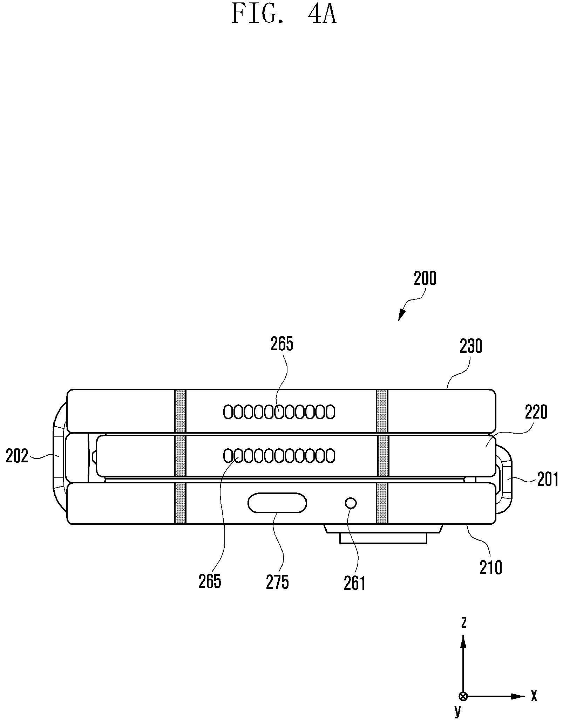

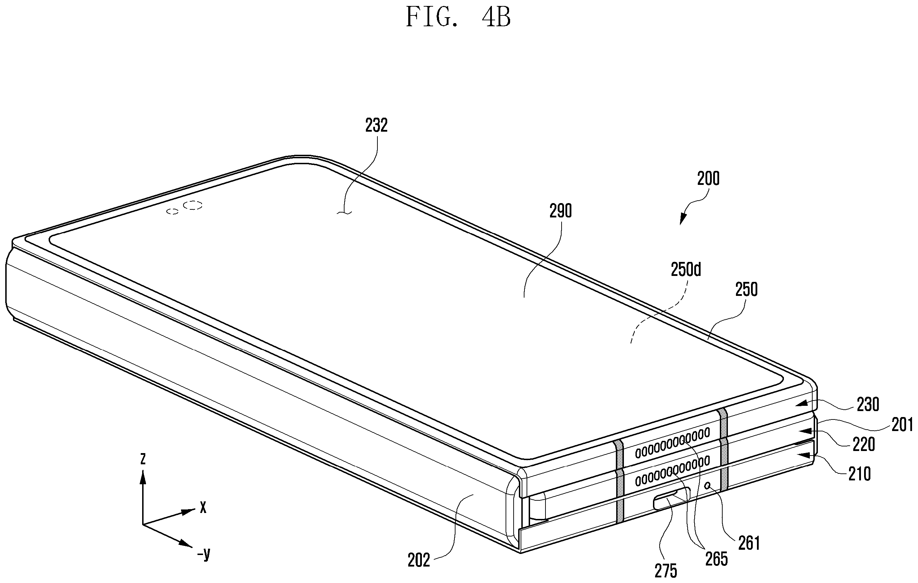

FIG. 3 is a schematic diagram of a multi-foldable electronic device according to an embodiment of the disclosure, illustrating a state in which a first housing and a second housing are folded and the first housing and a third housing are unfolded. FIGS. 4A and 4B are schematic diagrams of a multi-foldable electronic device according to an embodiment of the disclosure, illustrating a state in which a first housing, a second housing, and a third housing are folded.

According to an embodiment, FIG. 3 may be a view of the multi-foldable electronic device 200 in a state in which the second housing 220 is folded toward the first housing 210, and the third housing 230 is unfolded to about 180° with respect to the first housing 210, as viewed from the -y-axis direction.

According to an embodiment, FIG. 4A may be a view of the multi-foldable electronic device 200 in a state in which the second housing 220 is first folded toward the first housing 210, and the third housing 230 is later folded toward the first housing 210, such that the third housing 230 is positioned above (e.g., the z-axis direction) the second housing 220, as viewed from the -y-axis direction.

According to an embodiment, FIG. 4B may be a schematic perspective drawing of the multi-foldable electronic device 200, illustrating a state in which at least a portion of the sub-display 250 (e.g., the fourth display area 250d) is exposed to the outside while the second housing 220 and the third housing 230 are folded toward the first housing 210. For example, the multi-foldable electronic device 200 disclosed in FIGS. 3, 4A, and 4B may be folded in a G-type shape. According to various embodiments, the multi-foldable electronic device 200 may also be folded into various types (e.g., a Z-type) of shapes.

Referring to FIGS. 3, 4A, and 4B, the multi-foldable electronic device 200 may include a first housing 210, a second housing 220, a third housing 230, a first hinge assembly 201, and a second hinge assembly 202.

According to an embodiment, the second housing 220 may be first folded above (e.g., the z-axis direction) the first housing 210 through the first hinge assembly 201 (e.g., a first in-folding hinge).

According to an embodiment, after the second housing 220 is folded with respect to the first housing 210 using the first hinge assembly 201, the third housing 230 may be folded toward the first housing 210 using the second hinge assembly 202 (e.g., a second in-folding hinge) and disposed above (e.g., the z-axis direction) of the second housing 220.

According to an embodiment, the first hinge assembly 201 may have a first width. The second hinge assembly 202 may have a second width. For example, the second width may be greater than the first width. According to various embodiments, since the second housing 220 is folded with respect to the first housing 210 and the third housing 230 is folded with respect to the first housing 210 such that the third housing 230 is disposed above (e.g., the z-axis direction) of the second housing 220, the second width of the second hinge assembly 202 may be configured to be greater than the first width of the first hinge assembly 201. For example, the first hinge assembly 201 may include a first in-folding hinge, a slim hinge, or a small hinge with a smaller width than the second hinge assembly 202. For example, the second hinge assembly 202 may include a second in-folding hinge, a wide hinge, or a big hinge with a greater width than the first hinge assembly 201.

According to an embodiment, after the second housing 220 is folded with respect to the first housing 210 using the first hinge assembly 201 (e.g., a first in-folding hinge), the third housing 230 may be folded toward the second housing 220 using the second hinge assembly 202 (e.g., a second in-folding hinge) such that the third housing 230 is positioned above (e.g., the z-axis direction) the second housing 220. In this case, at least a portion of the sub-display 250 (e.g., the fourth display area 250d) disposed on the sixth surface 232 of the third housing 230 may be visually exposed to the outside of the multi-foldable electronic device 200.

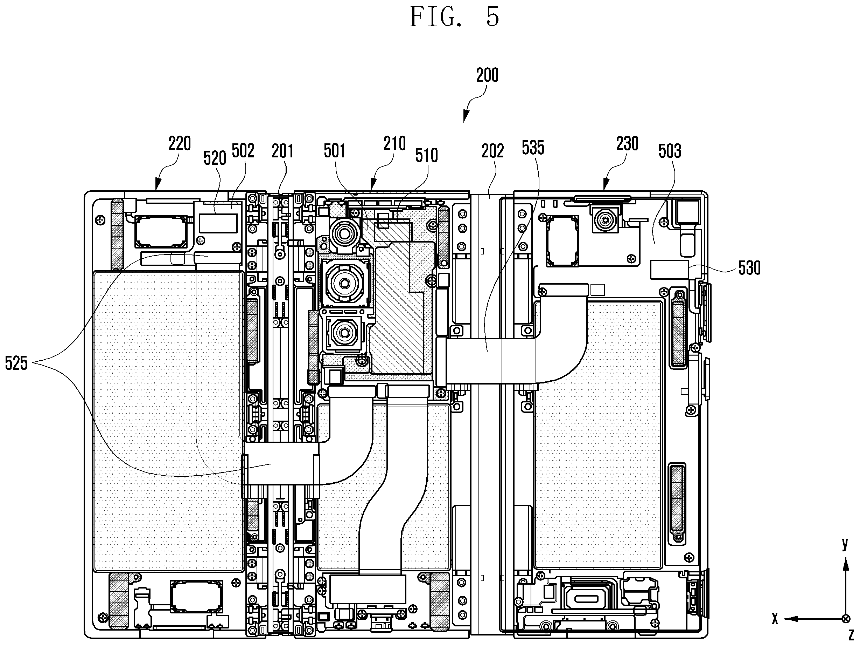

FIG. 5 is a schematic diagram of a multi-foldable electronic device, as viewed from the rear, according to an embodiment of the disclosure, illustrating a state in which some components are removed.

According to an embodiment, FIG. 5 may be a schematic diagram of the multi-foldable electronic device 200 disclosed in FIG. 2B according to an embodiment of the disclosure, illustrating a state in which the first rear cover 270, the second rear cover 280, and the third rear cover 290 are removed or omitted, as viewed from the rear (e.g., the -z-axis direction).

According to an embodiment, the first housing 210 may include a first printed circuit board 501 and a first sensor 510. The second housing 220 may include a second printed circuit board 502 and a second sensor 520. The third housing 230 may include a third printed circuit board 503 and a third sensor 530.

According to an embodiment, the first printed circuit board 501 and the second printed circuit board 502 may be electrically connected using a first flexible printed circuit board (FPCB) 525 (e.g., a first conductive connection member). The first flexible printed circuit board 525 may be disposed to extend across a portion of each of the first housing 210 and the second housing 220.

According to an embodiment, the first printed circuit board 501 and the third printed circuit board 503 may be electrically connected using a second flexible printed circuit board 535 (e.g., a second conductive connection member). The second flexible printed circuit board 535 may be disposed to extend across a portion of each of the first housing 210 and the third housing 230.

According to an embodiment, the first sensor 510 and/or the second sensor 520 may detect the angle (e.g., the folding angle and the unfolding angle) between the first housing 210 and the second housing 220. For example, when the first housing 210 and the second housing 220 are folded or unfolded using the first hinge assembly 201, the first sensor 510 and/or the second sensor 520 may detect the angle between the first housing 210 and the second housing 220. For example, the first sensor 510 or the second sensor 520 may include a 6-axis sensor and/or an angle sensor. For example, the first sensor 510 or the second sensor 520 may include an acceleration sensor and a gyro sensor. The acceleration sensor may sense the angle (e.g., the tilt angle) at which the first housing 210 and/or the second housing 220 is tilted with respect to the gravitational direction (e.g., the ground or the bottom surface). The gyro sensor may sense the angular velocity of the first housing 210 and/or the second housing 220. The gyro sensor may sense a rotational speed or a rotation angle of the first housing 210 and/or the second housing 220. The first sensor 510 or the second sensor 520 may be configured to include an accelerometer and a gyro sensor integrated therein.

According to an embodiment, the first sensor 510 and/or the third sensor 530 may detect the angle (e.g., the folding angle and unfolding angle) between the first housing 210 and the third housing 230. For example, when the first housing 210 and the third housing 230 are folded or unfolded using the second hinge assembly 202, the first sensor 510 and/or the third sensor 530 may detect the angle between the first housing 210 and the third housing 230. For example, the third sensor 530 may include a 6-axis sensor and/or an angle sensor. For example, the third sensor 530 may include an acceleration sensor and a gyro sensor. The acceleration sensor may sense the angle (e.g., the inclination angle) at which the first housing 210 and/or the third housing 230 is tilted with respect to the gravitational direction (e.g., the ground). The gyro sensor may sense the angular velocity of the first housing 210 and/or the third housing 230. The gyro sensor may sense a rotational speed or a rotation angle of the first housing 210 and/or the third housing 220. The third sensor 530 may be configured to include an acceleration sensor and a gyroscope integrated therein.

According to various embodiments, the multi-foldable electronic device 200 disclosed below may include at least some of the embodiments described with reference to FIGS. 1A to 5. Embodiments related to the multi-foldable electronic device 200 disclosed below may be integrated into and applied to, for example, the embodiments of the multi-foldable electronic device 200 disclosed in FIGS. 1A to 5. In the following description of the multi-foldable electronic device 200 according to various embodiments of the disclosure, components that are substantially the same as those of the embodiments disclosed in FIGS. 1A to 5 described above are assigned the same reference numerals, and redundant descriptions of functions thereof may be omitted.

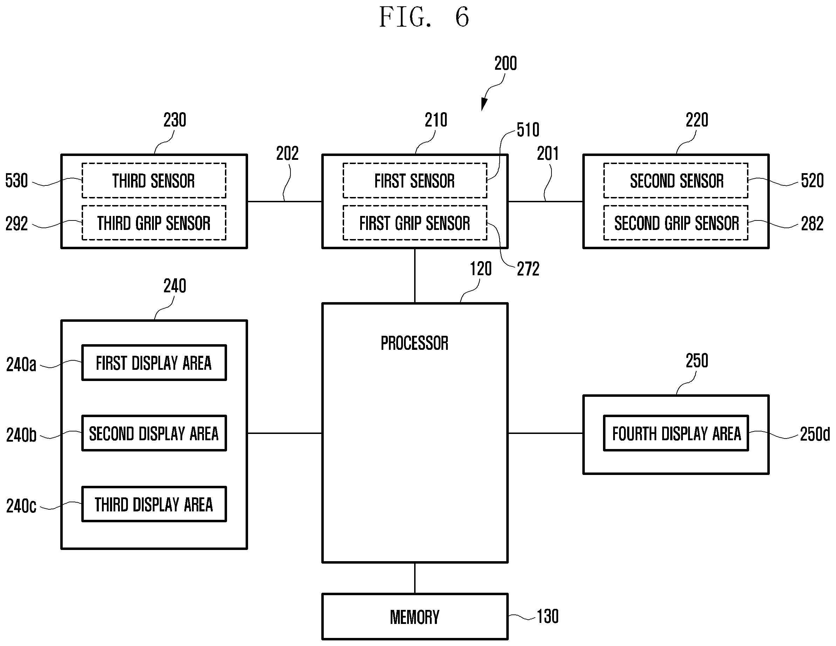

FIG. 6 is a schematic block diagram illustrating a configuration of a multi-foldable electronic device according to an embodiment of the disclosure.

Referring to FIG. 6, the multi-foldable electronic device 200 may include a first housing 210, a second housing 220, a third housing 230, a flexible display 240, a sub-display 250, a memory 130, and/or a processor 120.

According to an embodiment, the first housing 210 may include a first sensor 510 and a first grip sensor 272. The second housing 220 may include a second sensor 520 and a second grip sensor 282. The third housing 230 may include a third sensor 530 and a third grip sensor 292.

According to an embodiment, the first sensor 510, the second sensor 520, the third sensor 530, the first grip sensor 272, the second grip sensor 282, the third grip sensor 292, the flexible display 240, the sub-display 250, the memory 130, and the processor 120 may be electrically or operatively connected.

According to an embodiment, the first sensor 510 may be disposed in the first housing 210. The first sensor 510 may detect the angle (e.g., the folding angle and the unfolding angle) between the first housing 210 and the second housing 220, and may transmit information on the detected angle to the processor 120. For example, when the first housing 210 and the second housing 220 are folded or unfolded using the first hinge assembly 201, the first sensor 510 may detect the angle between the first housing 210 and the second housing 220. For example, the first sensor 510 may include at least one of a 6-axis sensor, an accelerometer, an angle sensor, a folding or unfolding measurement sensor, an angular velocity sensor, a Hall sensor, a gyro sensor, a motion sensor, and a proximity sensor. According to various embodiments, the first sensor 510 is not limited to the above-described sensors, and various other sensors capable of detecting an angle between the first housing 210 and the second housing 220 may also be used.

According to an embodiment, the second sensor 520 may be disposed in the second housing 220. The second sensor 520 may detect the angle (e.g., folding angle and unfolding angle) between the first housing 210 and the second housing 220, and transmit information on the detected angle to the processor 120. For example, when the first housing 210 and the second housing 220 are folded or unfolded using the first hinge assembly 201, the second sensor 520 may detect the angle between the first housing 210 and the second housing 220. For example, the second sensor 520 may include at least one of a 6-axis sensor, an acceleration sensor, an angle sensor, a folding or unfolding measurement sensor, an angular velocity sensor, a Hall sensor, a gyro sensor, a motion sensor, and a proximity sensor. According to various embodiments, the second sensor 520 is not limited to the above-described sensors, and various other sensors capable of detecting an angle between the first housing 210 and the second housing 220 may also be used.

According to an embodiment, the third sensor 530 may be disposed in the third housing 230. The third sensor 530 may detect the angle (e.g., the folding angle and the unfolding angle) between the first housing 210 and the third housing 230 and may transmit information on the detected angle to the processor 120. For example, when the first housing 210 and the third housing 230 are folded or unfolded using the second hinge assembly 202, the third sensor 530 may detect the angle between the first housing 210 and the third housing 230. For example, the third sensor 530 may include at least one of a 6-axis sensor, an acceleration sensor, an angle sensor, a folding or unfolding measurement sensor, an angular velocity sensor, a Hall sensor, a gyro sensor, a motion sensor, and a proximity sensor. According to various embodiments, the third sensor 530 is not limited to the above-described sensors, and various other sensors capable of detecting an angle between the first housing 210 and the third housing 230 may also be used.

According to various embodiments, at least one of the first sensor 510, the second sensor 520, and the third sensor 530 may detect rotation information and/or tilt information (e.g., inclination information) of the multi-foldable electronic device 200. For example, at least one of the first sensor 510, the second sensor 520, and the third sensor 530 may detect whether the multi-foldable electronic device is in a horizontal state unfolded with respect to the gravitational direction (e.g., the ground) or in a vertical state erected with respect to the gravitational direction. For example, at least one of the first sensor 510, the second sensor 520, and the third sensor 530 may detect the usage state, placement state, and/or mounted state of the first housing 210, the second housing 220, and/or the third housing 230.

According to an embodiment, the first grip sensor 272 may be disposed in the first housing 210. The first grip sensor 272 may detect whether a user grips the first housing 210 and may transmit the detected signal to the processor 120. According to an embodiment, the second grip sensor 282 may be disposed in the second housing 220. The second grip sensor 282 may detect whether a user grips the second housing 220, and may transmit a detected signal to the processor 120. According to various embodiments, the first grip sensor 272 and/or the second grip sensor 282 may detect whether a user grips the area around the first hinge assembly 201, and may transmit a detected signal to the processor 120. According to an embodiment, the third grip sensor 292 may be disposed in the third housing 230. The third grip sensor 292 may detect whether a user grips the third housing 230 and may transmit a detected signal to the processor 120.

According to an embodiment, the flexible display 240 (e.g., the first display or the main display) may include a first display area 240a, a second display area 240b, and a third display area 240c. The flexible display 240 may display execution screens of different applications on the first display area 240a, the second display area 240b, and the third display area 240c under the control of the processor 120. For example, the first display area 240a may display the execution screen of a first application. The second display area 240b may display the execution screen of a second application. The third display area 240c may display an execution screen of a third application. According to various embodiments, the flexible display 240 may display, under the control of the processor 120, substantially the same application execution screen in the first display area 240a, the second display area 240b, and the third display area 240c.

According to an embodiment, the sub-display 250 (e.g., a second display or an auxiliary display) may include a fourth display area 250d. The sub-display 250 may, under the control of the processor 120, display execution screens of applications that are substantially the same as or different from those displayed on the first display area 240a, the second display area 240b, and the third display area 240c. For example, the fourth display area 250d may display an execution screen of a fourth application.

According to various embodiments, when the first housing 210, the second housing 220, and the third housing 230 are folded, the multi-foldable electronic device 200 may, under the control of the processor 120, display an application execution screen on the sub-display 250 (e.g., the fourth display area 250d). For example, in a state in which the first housing 210, the second housing 220, and the third housing 230 are folded, when the third housing 230 is unfolded with respect to the first housing 210 (e.g., unfolded to about 180°), the multi-foldable electronic device 200 may display the application execution screen displayed on the sub-display 250 (e.g., on the fourth display area 250d) on the third display area 240c of the flexible display 240.

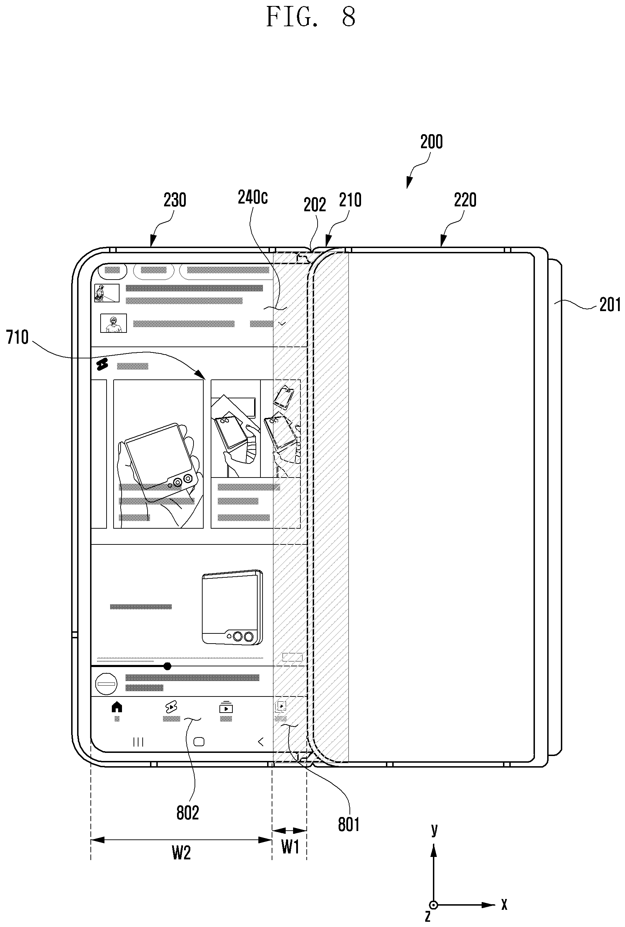

According to various embodiments, when the first housing 210 and the third housing 230 are unfolded to about 180° using the second hinge assembly 202 and the first housing 210 and the second housing 220 are folded using the first hinge assembly 201, the multi-foldable electronic device 200 may recognize that a user grips the first housing 210, the second housing 220, and/or the third housing 230, by using the first grip sensor 272, the second grip sensor 282, and/or the third grip sensor 292. For example, when the multi-foldable electronic device 200 recognizes, through a first grip sensor 272, a second grip sensor 282, and/or a third grip sensor 292, that a user grips at least one of a first housing 210, a second housing 220, and a third housing 230, the multi-foldable electronic device 200 may recognize that the user performs an operation for unfolding the second housing 220 from the first housing 210. For example, when a touch input on a portion (e.g., the first portion 801 of FIG. 8) of the third display area 240c of the flexible display 240 is detected (e.g., received) while a user grips at least one of the first housing 210, the second housing 220, and the third housing 230, and a movement in which the first hinge assembly 201 is unfolded is detected, the multi-foldable electronic device 200 may deactivate sensing of the touch input on the portion (e.g., the first portion 801 of FIG. 8) of the third display area 240c of the flexible display 240.

According to an embodiment, the multi-foldable electronic device 200 may, for example, when the first housing 210 and the third housing 230 are unfolded to about 180° using the second hinge assembly 202 and the first housing 210 and the second housing 220 are folded using the first hinge assembly 201, identify whether a user performs a touch input on a portion (e.g., the first portion 801 of FIG. 8) of the third display area 240c in order to unfold the second housing 220 from the first housing 210. For example, upon reception (e.g., detection) of a touch input on the portion (e.g., the first portion 801 of FIG. 8) of the third display area 240c, the multi-foldable electronic device 200 may detect, by using at least one of the first grip sensor 272, the second grip sensor 282, and the third grip sensor 292, whether the user grips at least one of the first housing 210, the second housing 220, and the third housing 230 in order to unfold the second housing 220 from the first housing 210. Based on that at least one of the first housing 210, the second housing 220, and the third housing 230 is in a grip state, the multi-foldable electronic device 200 may deactivate sensing of the touch input on the portion (e.g., the first portion 801 of FIG. 8) of the third display area 240c.

According to an embodiment, the multi-foldable electronic device 200 may, for example, when the first housing 210 and the third housing 230 are unfolded to about 180° using the second hinge assembly 202 and the first housing 210 and the second housing 220 are folded using the first hinge assembly 201, detect, by using at least one of the first grip sensor 272, the second grip sensor 282, and the third grip sensor 292, whether the user grips at least one of the first housing 210, the second housing 220, and the third housing 230 in order to unfold the second housing 220 from the first housing 210. For example, the multi-foldable electronic device 200 may identify whether the user performs a touch input on a portion (e.g., the first portion 801 of FIG. 8) of the third display area 240c in order to unfold the second housing 220 from the first housing 210.

According to an embodiment, after a touch input on a portion (e.g., the first portion 801 of FIG. 8) of the third display area 240c of the flexible display 240 and based on release of the touch input, when an unfolding movement of the first hinge assembly 201 is detected within a designated time through the first sensor 510 and/or the second sensor 520, the multi-foldable electronic device 200 may ignore the touch input on the portion (e.g., the first portion 801 of FIG. 8) of the third display area 240c or deactivate sensing of the touch input on the portion of the third display area 240c.

According to an embodiment, when the unfolding movement of the first hinge assembly 201 is detected through the first sensor 510 and/or the second sensor 520 within a predetermined time after release of the touch input that is detected on the portion (e.g., the first portion 801 of FIG. 8) of the third display area 240c, the multi-foldable electronic device 200 may ignore the touch input on the portion of the third display area 240c or deactivate sensing of the touch input on the portion of the third display area 240c.

According to an embodiment, the designated time may include a period from a time point at which the touch input for the portion (e.g., the first portion 801 of FIG. 8) of the third display area 240c of the flexible display 240 is detected, to a time immediately after the touch input is released.

According to an embodiment, the deactivation of sensing of a touch input on the portion (e.g., the first portion 801 of FIG. 8) of the third display area 240c may be a state in which sensitivity is adjusted such that a user's touch input is ignored, under the control of the processor 120. For example, the portion (e.g., the first portion 801 of FIG. 8) of the third display area 240c may be an area overlapping at least a portion of the second hinge assembly 202.

According to an embodiment, the deactivation of sensing of the touch input on the portion (e.g., the first portion 801 of FIG. 8) of the third display area 240c may include, for example, adjusting sensitivity for the touch input on the portion of the third display area 240c to be low by a touch circuit (e.g., the touch circuit 168 of FIG. 1B). For example, the deactivation of sensing of the touch input on the portion of the third display area 240c may include not transmitting touch input information on the portion of the third display area 240c to the processor 120 by the touch circuit. For example, the deactivation of sensing of the touch input on the portion of the third display area 240c may include not processing a touch input signal on the portion of the third display area 240c by the processor 120.

According to an embodiment, a state in which sensitivity is adjusted such that a user's touch input on a portion (e.g., the first portion 801 of FIG. 8) of the third display area 240c is ignored may indicate, for example, that a minimum current change value of a touch sensing electrode of a touch circuit (e.g., the touch circuit 168 of FIG. 1B) for recognizing a touch input is increased by a large margin. For example, the touch circuit 168 of the display module 160 may adjust touch sensitivity (e.g., recognition sensitivity) for touch recognition in at least one of the first display area 240a, the second display area 240b, the third display area 240c, and the fourth display area 250d. For example, adjustment of the touch sensitivity (e.g., recognition sensitivity) of the touch circuit 168 may refer to adjusting a threshold value representing a minimum current change value of a touch sensing electrode for recognizing a touch input. According to an embodiment, when the first housing 210 and the second housing 220 are unfolded using the first hinge assembly 201 and the first display area 240a is activated, the multi-foldable electronic device 200 may switch a portion (e.g., the first portion 801 of FIG. 8) of the third display area 240c, which is in an inactive state, such that the portion is activated. For example, when the first housing 210 and the second housing 220 are unfolded using the first hinge assembly 201 and the first display area 240a is activated, the multi-foldable electronic device 200 may activate sensing a touch input on a portion (e.g., the first portion 801 of FIG. 8) (e.g., a region corresponding to touch input) of the third display area 240c that is in an inactive state.

According to one embodiment, the flexible display 240 and/or the sub-display 250 may include a touch circuit (e.g., the touch circuit 168 of FIG. 1B). The touch circuit (e.g., the touch circuit 168 of FIG. 1B) may include a touch sensor 168a and a touch sensor IC 168b disclosed in FIG. 1B. The touch circuit (e.g., the touch circuit 168 of FIG. 1B) may receive (e.g., detect) a touch input and/or a hovering input for a designated position of the flexible display 240 and/or the sub-display 250. For example, the touch circuit (e.g., the touch circuit 168 of FIG. 1B) may operate or may not operate under the control of the processor 120. For example, at least some of the first display area 240a, the second display area 240b, the third display area 240c, and the fourth display area 250d of the flexible display 240 and the sub-display 250 may be activated and/or deactivated under the control of the processor 120. For example, the touch circuit (e.g., the touch circuit 168 of FIG. 1B) may not transmit a touch input received through at least a portion of the flexible display 240 and/or the sub-display 250 to the processor 120. For example, based on a usage state (e.g., a placement state) of the multi-foldable electronic device 200, the processor 120 may activate or deactivate at least some of the first display area 240a, the second display area 240b, the third display area 240c, and the fourth display area 250d. For example, the multi-foldable electronic device 200 may ignore (e.g., deactivate) a touch input on a portion (e.g., the first portion 801 of FIG. 8) of the third display area 240c, under the control of the processor 120. For example, the multi-foldable electronic device 200 may activate or deactivate a portion (e.g., the first portion 801 of FIG. 8) of the third display area 240c, under the control of the processor 120. For example, the multi-foldable electronic device 200 may active or deactivate sensing of a touch input on the portion (e.g., the first portion 801 of FIG. 8) of the third display area 240c, under the control of the processor 120.

According to an embodiment, when the first housing 210 and the third housing 230 are unfolded to about 180° using the second hinge assembly 202 and the first housing 210 and the second housing 220 are folded using the first hinge assembly 201, the multi-foldable electronic device 200 may be configured to receive (e.g., detect) a touch input on a portion (e.g., the first portion 801 of FIG. 8) of the third display area 240c of the flexible display 240, detect an unfolding movement of the first hinge assembly 201 after receiving the touch input on the first portion 801, and deactivate (e.g., ignore) sensing of the touch input on the portion of the third display area 240c based on the unfolding movement of the first hinge assembly 201. For example, the unfolding movement of the first hinge assembly 201 may include a movement in which the first housing 210 and the second housing 220 are unfolded to a designated angle.

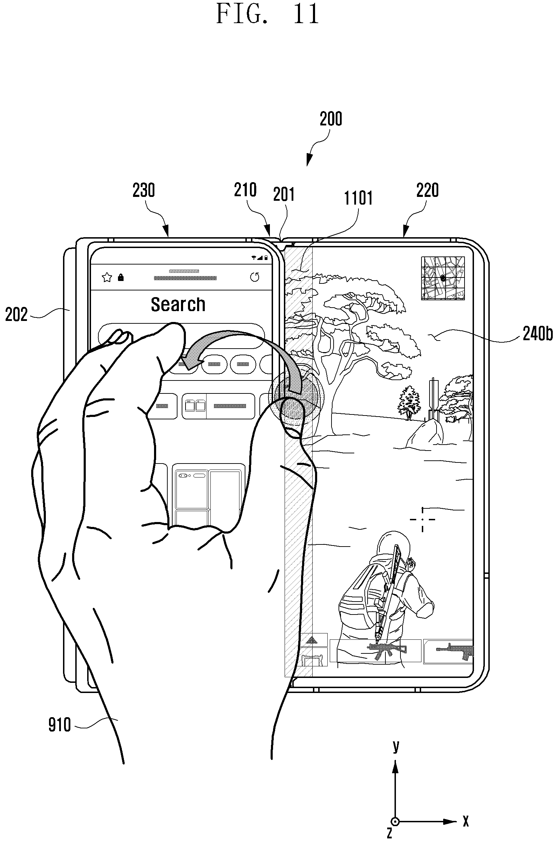

According to various embodiments, in this document, reception of a touch input on a portion (e.g., the first portion 1101 of FIG. 11) of the second display area 240b and/or a portion (e.g., the first portion 801 of FIG. 8) of the third display area 240c may include, for example, detection, identification, recognition, or determination.

According to various embodiments, the flexible display 240 and/or the sub-display 250 may display an initial screen, a configuration screen, and/or execution screens of various applications of the multi-foldable electronic device 200. The flexible display 240 and/or the sub-display 250 may provide a user interface (UI) capable of providing various services to a user of the multi-foldable electronic device 200. For example, the flexible display 240 and/or the sub-display 250 may provide a screen for configuring functions and operations of a designated application through the input module 150.

According to various embodiments, the flexible display 240 and/or the sub-display 250 may perform a display function and an input function. In order to perform the display function and the input function, the flexible display 240 and/or the sub-display 250 may include a display (e.g., the display 161 of FIG. 1B) and a touch circuit (e.g., the touch circuit 168 of FIG. 1B). The display 161 may visually provide menus, input data, function configuration information, and various information of the multi-foldable electronic device 200 to a user. The display 161 may include at least one of a liquid crystal display (LCD), an organic light emitting diode (OLED), and an active matrix organic light emitting diode (AMOLED). The touch circuit 168 may include a touch sensor (e.g., the touch sensor 168a of FIG. 1B) and a pressure sensor, wherein the touch sensor may be a capacitive overlay type, a resistive overlay type, or an infrared beam type.

According to various embodiments, the memory 130 may store an initial screen, a configuration screen, and/or various applications of the multi-foldable electronic device 200 that are provided through the flexible display 240 and/or the sub-display 250. The memory 130 may store a user interface (UI) capable of providing various services to a user of the multi-foldable electronic device 200. The memory 130 may perform a function of storing a program (e.g., the program 140 of FIG. 1A) for processing and control by the processor 120, an operating system (e.g., the operating system 142 of FIG. 1A), various applications, and input/output data. The memory 130 may store a program for controlling overall operations of the multi-foldable electronic device 200. The memory 130 may store various configuration information required when functions are processed in the multi-foldable electronic device 200. The memory 130 may store at least one executable instruction. For example, the memory 130 may store at least one instruction that, when executed by the processor 120, causes the multi-foldable electronic device 200 to perform at least one operation. For example, the at least one instruction may be stored in a computer-readable recording medium. The recording medium may be tangible and non-transitory. The memory 130 and/or the recording medium may store one or more programs including the at least one instruction.

According to various embodiments, the multi-foldable electronic device 200 may be in a state in which the first housing 210 and the third housing 230 are unfolded to about 180° using the second hinge assembly 202, and the first housing 210 and the second housing 220 are folded using the first hinge assembly 201. For example, instructions stored in the memory 130, when executed by the processor 120, may cause the multi-foldable electronic device 200 to receive a touch input on a portion (e.g., the first portion 801 of FIG. 8) of the third display area 240c of the flexible display 240, detect an unfolding movement of the first hinge assembly 201 after receiving the touch input on the portion (e.g., the first portion 801 of FIG. 8), and deactivate (e.g., ignore) sensing of the touch input on the portion of the third display area 240c based on the unfolding movement of the first hinge assembly 201. For example, the deactivation may include ignoring the touch input on the portion (e.g., the first portion 801 of FIG. 8) of the third display area 240c.

According to an embodiment, the processor 120 may be operatively connected to the first sensor 510, the second sensor 520, the third sensor 530, the first grip sensor 272, the second grip sensor 282, the third grip sensor 292, the flexible display 240, the sub-display 250, and the memory 130. The processor 120 may control functions and operations of the first sensor 510, the second sensor 520, the third sensor 530, the first grip sensor 272, the second grip sensor 282, the third grip sensor 292, the flexible display 240, the sub-display 250, and the memory 130. The processor 120 may be configured to access the memory 130 and execute at least one instruction. The multi-foldable electronic device 200 may include at least one processor 120.

According to various embodiments, the processor 120 may perform functions of controlling the overall operations of the multi-foldable electronic device 200 and the signal flow between internal components, and processing data. The processor 120 may include, for example, a central processing unit (CPU), an application processor, and/or a communication processor. The processor 120 may include a single-core processor or a multi-core processor. The processor 120 may be implemented as at least one processor. For example, the processor 120 may include an application processor (e.g., the main processor 121 of FIG. 1A) and a sensor hub processor (e.g., the auxiliary processor 123 of FIG. 1A). For example, the sensor hub processor may be operatively connected to the first sensor 510, the second sensor 520, and the third sensor 530, and may transmit information detected and/or sensed through at least one of the first sensor 510, the second sensor 520, and the third sensor 530 to the application processor. For example, the sensor hub processor may be operatively connected to the first grip sensor 272, the second grip sensor 282, and the third grip sensor 292, and may transmit information detected and/or sensed through at least one of the first grip sensor 272, the second grip sensor 282, and the third grip sensor 292 to the application processor.

According to various embodiments, operations executed in the multi-foldable electronic device 200 may be performed and/or executed by at least one instruction stored in the processor 120 and/or the memory 130. For example, in this document, an embodiment in which the multi-foldable electronic device 200 may perform a certain operation may be interpreted as meaning that the operation is performed by at least one instruction stored in the processor 120 and/or the memory 130.

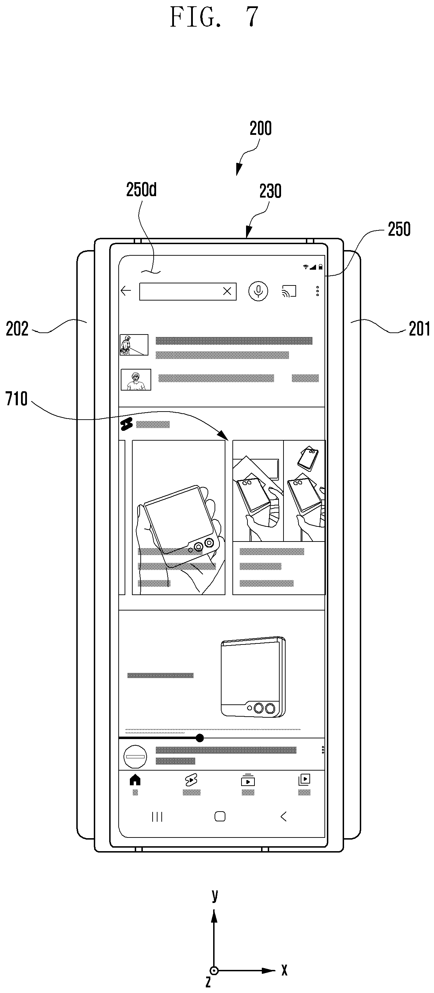

FIG. 7 is a schematic diagram of a multi-foldable electronic device in a folded state according to an embodiment of the disclosure. FIG. 8 is a schematic diagram of a multi-foldable electronic device according to an embodiment of the disclosure, illustrating a state in which a first housing and a third housing are unfolded and the first housing and a second housing are folded.

Referring to FIG. 7, the multi-foldable electronic device 200 may first fold the second housing 220 toward the first housing 210 by using the first hinge assembly 201, and then fold the third housing 230 toward the first housing 210 by using the second hinge assembly 202. In this case, the fourth display area 250d of the sub-display 250 disposed on the rear surface (e.g., in the -z-axis direction) of the third housing 230 may be visually exposed to the outside.

According to an embodiment, when the first housing 210, the second housing 220, and the third housing 230 of the multi-foldable electronic device 200 are folded, the fourth display area 250d of the sub-display 250 may display an application execution screen 710.

According to an embodiment, the application execution screen 710 may include a screen on which the application is running. For example, the application may refer to software used by a user, which runs on a computer operating system (OS) or a mobile OS. For example, the application may include at least one of a word processor, a spreadsheet, a social network system (SNS), a chatting application, a map, a music player, and a video player. For example, the application may include a specific application such as a paint application or a photo editor. An application according to various embodiments of the disclosure may include various types of software that are designable using an input module (e.g., the input module 150 of FIG. 1A).

Referring to FIG. 8, the multi-foldable electronic device 200 may be configured such that the second housing 220 is folded toward the first housing 210 by using the first hinge assembly 201, and the third housing 230 is unfolded to about 180° with respect to the first housing 210 by using the second hinge assembly 202.

According to an embodiment, as shown in FIG. 7, in a state in which the first housing 210, the second housing 220, and the third housing 230 are folded and the application execution screen 710 is displayed on the fourth display area 250d of the sub-display 250, when the third housing 230 is unfolded to about 180° with respect to the first housing 210 as shown in FIG. 8, the application execution screen 710 displayed on the fourth display area 250d of the sub-display 250 may be displayed on the third display area 240c of the flexible display 240.

According to an embodiment, the third display area 240c disposed on the front surface (e.g., in the z-axis direction) of the third housing 230 may include a first portion 801 and a second portion 802. For example, the first portion 801 of the third display area 240c may be an area adjacent to the second hinge assembly 202. For example, the first portion 801 of the third display area 240c may be an area that overlaps at least a portion of the second hinge assembly 202. For example, the first portion 801 of the third display area 240c may include an area that is touched by a portion (e.g., the thumb) of the user's body to unfold the second housing 220 from the first housing 210.

According to an embodiment, the first portion 801 of the third display area 240c may include a first width W1, and the second portion 802 may include a second width W2. The first width W1 of the first portion 801 may be narrower than the second width W2 of the second portion 802.

According to an embodiment, in a state in which the third housing 230 is unfolded to about 180° with respect to the first housing 210 by using the second hinge assembly 202 and the first housing 210 and the second housing 220 are folded using the first hinge assembly 201, when a user unfolds the second housing 220 from the first housing 210, the first portion 801 of the third display area 240c may be an area on which a touch input is performed using, for example, a user's thumb.

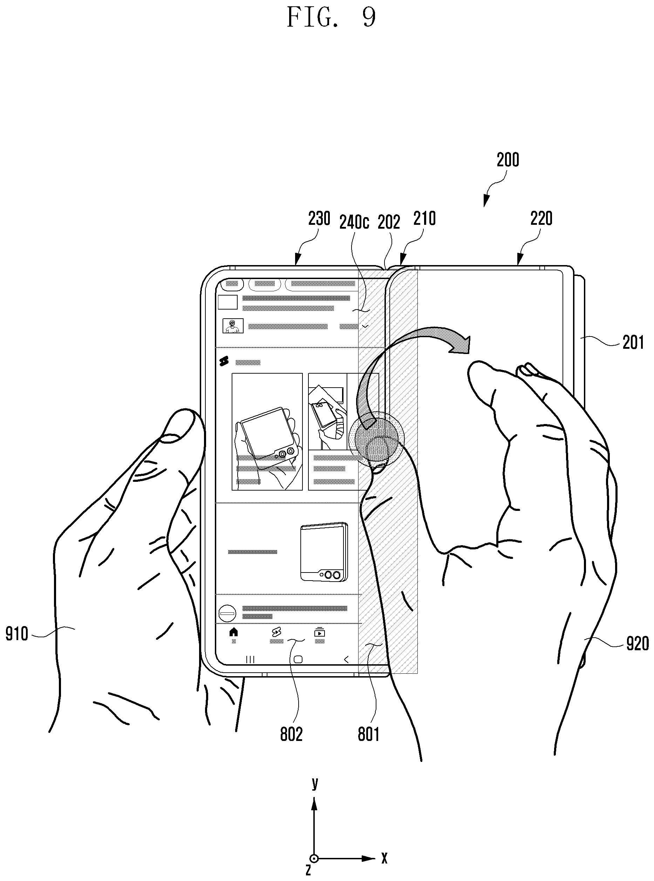

FIG. 9 is a schematic diagram of a multi-foldable electronic device according to an embodiment of the disclosure, illustrating unfolding of a second housing from a first housing in a state in which the first housing and a third housing are unfolded and the first housing and the second housing are folded.

According to an embodiment, the multi-foldable electronic device 200 may be configured such that the first housing 210 and the third housing 230 are unfolded to about 180° using the second hinge assembly 202. For example, the multi-foldable electronic device 200 may, using a first sensor 510 and/or a third sensor 530, detect that the first housing 210 and the third housing 230 are unfolded to about 180° using the second hinge assembly 202.

According to an embodiment, the multi-foldable electronic device 200 may be configured such that the first housing 210 and the second housing 220 are folded using the first hinge assembly 201. For example, the multi-foldable electronic device 200 may, using the first sensor 510 and/or a second sensor 520, detect that the first housing 210 and the second housing 220 are folded using the first hinge assembly 201.

According to an embodiment, the multi-foldable electronic device 200 may detect whether there is a touch input on the first portion 801 of the third display area 240c of the flexible display 240 for a user to unfold the second housing 220 from the first housing 210. For example, the multi-foldable electronic device 200 may receive a touch input on the first portion 801 of the third display area 240c of the flexible display 240 for the user to unfold the second housing 220 from the first housing 210.

According to an embodiment, when a user's touch input on the first portion 801 of the third display area 240c is received, the multi-foldable electronic device 200 may identify, for example, that the user grips the third housing 230 using the left hand 910 and grips the first housing 210 and/or the second housing 220 using the right hand 920. For example, the touch input on the first portion 801 of the third display area 240c may be a thumb touch input performed by the user to unfold the second housing 220 from the first housing 210.

According to an embodiment, when there is a received signal related to the user's touch input on the first portion 801 of the third display area 240c and the user attempts to perform an operation of unfolding the second housing 220 from the first housing 210, the multi-foldable electronic device 200 may detect an unfolding movement of the first hinge assembly 201. For example, the unfolding movement of the first hinge assembly 201 may include a movement in which the first housing 210 and the second housing 220 are unfolded to a designated angle. For example, the unfolding movement of the first hinge assembly 201 may be identified based on a change in sensitivity of the first sensor 510 (e.g., a Hall sensor) disposed in the first housing 210 or the second sensor 520 (e.g., a Hall sensor) disposed in the second housing 220.

According to an embodiment, the multi-foldable electronic device 200 may deactivate (e.g., ignore) sensing of a touch input on the first portion 801 of the third display area 240c based on the unfolding movement of the first hinge assembly 201.

According to an embodiment, when the first housing 210 and the second housing 220 are unfolded using the first hinge assembly 201 and the first display area 240a is activated, the multi-foldable electronic device 200 may activate the first portion 801 of the third display area 240c that is in an inactive state. For example, when the first housing 210 and the second housing 220 are unfolded using the first hinge assembly 201 and the first display area 240a is activated, the multi-foldable electronic device 200 may activate an area corresponding to touch input on the first portion 801 of the third display area 240c that is in an inactive state.

According to an embodiment, after a touch input on the first portion 801 of the third display area 240c and based on release of the touch input, when an unfolding movement of the first hinge assembly 201 is detected within a designated time through the first sensor 510 and/or the second sensor 520, the multi-foldable electronic device 200 may ignore the touch input on the first portion 801 of the third display area 240c or deactivate sensing of the touch input on the first portion 801 of the third display area 240c.

According to an embodiment, when an unfolding movement of the first hinge assembly 201 is detected through the first sensor 510 and/or the second sensor 520 within a predetermined time after release of the touch input that is detected on the first portion 801 of the third display area 240c, the multi-foldable electronic device 200 may ignore the touch input on the first portion 801 of the third display area 240c or deactivate sensing of the touch input on the first portion 801 of the third display area 240c.

According to an embodiment, the deactivation of sensing of a touch input on the first portion 801 of the third display area 240c may be a state in which sensitivity is adjusted such that a user's touch input is ignored (e.g., about 0 phi to 3 phi). For example, the activation of sensing of a touch input on the first portion 801 of the third display area 240c may be a state in which sensitivity is adjusted such that a user's touch input is recognized (e.g., about 4 phi to 6 phi).

According to various embodiments, in a state in which an execution screen of a specific application is displayed on the third display area 240c, when a user's touch input on the first portion 801 of the third display area 240c is received, the multi-foldable electronic device 200 may not ignore the touch input on the first portion 801 of the third display area 240c or may not deactivate sensing of the touch input on the first portion 801 of the third display area 240c even if an unfolding movement of the first hinge assembly 201 is detected. For example, the specific application may include a paint application or a photo editor capable of editing drawings or images.

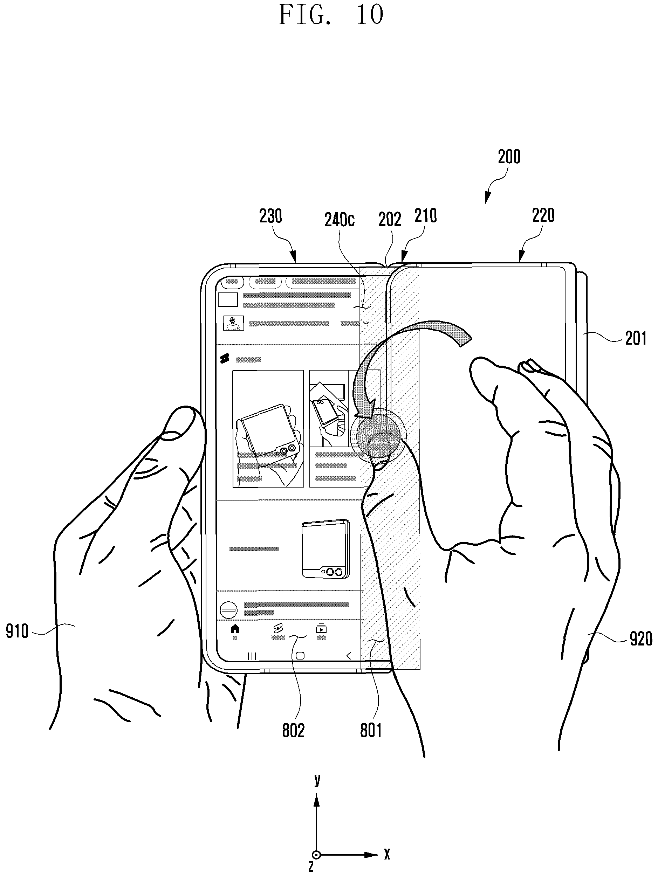

FIG. 10 is a schematic diagram of a multi-foldable electronic device according to an embodiment of the disclosure, illustrating folding of a second housing toward a first housing in a state in which the first housing and a third housing are unfolded and the first housing and the second housing are unfolded.

According to an embodiment, the multi-foldable electronic device 200 may be configured such that the first housing 210 and the third housing 230 are unfolded to about 180° using the second hinge assembly 202. For example, the multi-foldable electronic device 200 may detect that the first housing 210 and the third housing 230 are unfolded to about 180° using the second hinge assembly 202, by using the first sensor 510 and/or the third sensor 530.

According to an embodiment, the multi-foldable electronic device 200 may be configured such that the first housing 210 and the second housing 220 are unfolded using a first hinge assembly 201. For example, the multi-foldable electronic device 200 may detect that the first housing 210 and the second housing 220 are unfolded using the first hinge assembly 201, by using the first sensor 510 and/or the second sensor 520.

According to an embodiment, the multi-foldable electronic device 200 may detect whether there is a touch input on the first portion 801 of the third display area 240c of the flexible display 240, for folding the second housing 220 with respect to the first housing 210. For example, the multi-foldable electronic device 200 may receive a touch input on the first portion 801 of the third display area 240c of the flexible display 240, for folding the second housing 220 with respect to the first housing 210.

According to an embodiment, when a user's touch input on the first portion 801 of the third display area 240c is received, the multi-foldable electronic device 200 may identify, for example, that the user grips the third housing 230 using the left hand 910 and grips the first housing 210 and/or the second housing 220 using the right hand 920. For example, the touch input on the first portion 801 of the third display area 240c may be a thumb touch input performed by the user to fold the second housing 220 with respect to the first housing 210.

According to an embodiment, when a user's touch input on the first portion 801 of the third display area 240c is received and the user attempts to fold the second housing 220 with respect to the first housing 210, the multi-foldable electronic device 200 may detect a movement in which the first hinge assembly 201 is folded. For example, the movement in which the first hinge assembly 201 is folded may include a movement in which the first housing 210 and the second housing 220 are folded to a designated angle. For example, the movement in which the first hinge assembly 201 is folded may be identified based on a change in sensitivity of the first sensor 510 disposed in the first housing 210 or the second sensor 520 disposed in the second housing 220.

According to an embodiment, the multi-foldable electronic device 200 may deactivating sensing of a touch input on the first portion 801 of the third display area 240c, based on the movement in which the first hinge assembly 201 is folded.

According to an embodiment, when the first housing 210 and the second housing 220 are folded using the first hinge assembly 201 and the third display area 240c is activated, the multi-foldable electronic device 200 may activate sensing of a touch input on the first portion 801 of the third display area 240c that is in an inactive state (e.g., the area corresponding to the touch input).

According to an embodiment, the deactivation of sensing of the touch input on the first portion 801 of the third display area 240c may be a state in which sensitivity is adjusted such that a user's touch input is ignored (e.g., about 0 to 3 phi). For example, the activation of sensing of the touch input on the first portion 801 of the third display area 240c may be a state in which sensitivity is adjusted such that a user's touch input is recognized (e.g., about 4 phi to 6 phi).

According to various embodiments, when an execution screen of a specific application is displayed on the third display area 240c and a user's touch input on the first portion 801 of the third display area 240c is received, the multi-foldable electronic device 200 may not ignore the touch input on the first portion 801 of the third display area 240c or may not deactivate sensing of the touch input on the first portion 801 of the third display area 240c, even if a movement in which the first hinge assembly 201 is folded is detected. For example, the specific application may include a paint application or a photo editor capable of editing a drawing or an image.

FIG. 11 is a schematic diagram of a multi-foldable electronic device according to an embodiment of the disclosure, illustrating unfolding of a third housing from a first housing in a state in which the first housing and a second housing are unfolded and the first housing and the third housing are folded.

According to an embodiment, the multi-foldable electronic device 200 may be configured such that the first housing 210 and the second housing 220 are unfolded to about 180° using the first hinge assembly 201. For example, the multi-foldable electronic device 200 may detect that the first housing 210 and the second housing 220 are unfolded to about 180° using the first hinge assembly 201, by using the first sensor 510 and/or the second sensor 520.

According to an embodiment, the multi-foldable electronic device 200 may be configured such that the first housing 210 and the third housing 230 are folded using the second hinge assembly 202. For example, the multi-foldable electronic device 200 may detect that the first housing 210 and the third housing 230 are folded using the second hinge assembly 202, by using the first sensor 510 and/or the third sensor 530.

According to an embodiment, the multi-foldable electronic device 200 may detect whether there is a touch input on the first portion 1101 of the second display area 240b of the flexible display 240, for unfolding the third housing 230 from the first housing 210. For example, the multi-foldable electronic device 200 may receive a touch input on the first portion 1101 of the second display area 240b of the flexible display 240, for unfolding the third housing 230 from the first housing 210.

According to an embodiment, when a user's touch input on the first portion 1101 of the second display area 240b is received, the multi-foldable electronic device 200 may identify, for example, that the user grips the third housing 230 using the left hand 910. For example, the touch input on the first portion 1101 of the second display area 240b may be a thumb touch input performed by the user to unfold the third housing 230 from the first housing 210.

According to an embodiment, when a user's touch input on the first portion 1101 of the second display area 240b is received and the user attempts to unfold the third housing 230 from the first housing 210, the multi-foldable electronic device 200 may detect a movement in which the second hinge assembly 202 is unfolded. For example, the movement in which the second hinge assembly 202 is unfolded may include a movement in which the first housing 210 and the third housing 230 are unfolded to a designated angle.

According to an embodiment, the multi-foldable electronic device 200 may deactivate sensing of a touch input on the first portion 1101 of the second display area 240b, based on the movement in which the second hinge assembly 202 is unfolded.

According to an embodiment, when the first housing 210 and the third housing 230 are unfolded using the second hinge assembly 202 and the first display area 240a is activated, the multi-foldable electronic device 200 may activate sensing of a touch input on the first portion 1101 of the second display area 240b that is in an inactive state.

According to an embodiment, after a touch input on the first portion 1101 of the second display area 240b and based on release of the touch input, when a movement in which the second hinge assembly 202 is unfolded is detected within a designated time through the first sensor 510 and/or the third sensor 530, the multi-foldable electronic device 200 may ignore the touch input on the first portion 1101 of the second display area 240b or deactivate sensing of the touch input on the first portion 1101 of the second display area 240b.

According to an embodiment, when a movement in which the second hinge assembly 202 is unfolded is detected within a designated time through the first sensor 510 and/or the third sensor 530 after release of a touch input that is detected on the first portion 1101 of the second display area 240b, the multi-foldable electronic device 200 may ignore the touch input on the first portion 1101 of the second display area 240b or deactivate sensing of the touch input on the first portion 1101 of the second display area 240b.

According to an embodiment, the deactivation of sensing of the touch input on the first portion 1101 of the second display area 240b may be a state in which sensitivity is adjusted such that a user's touch input is ignored (e.g., about 0 phi to 3 phi). For example, the activation of sensing of the touch input on the first portion 1101 of the second display area 240b may be a state in which sensitivity is adjusted such that a user's touch input is recognized (e.g., about 4 phi to 6 phi).

According to various embodiments, when an execution screen of a specific application is displayed on the second display area 240b and a user's touch input on the first portion 1101 of the second display area 240b is received, the multi-foldable electronic device 200 may not ignore the touch input on the first portion 1101 of the second display area 240b or may not deactivate sensing of the touch input on the first portion 1101 of the second display area 240b, even if a movement in which the second hinge assembly 202 is unfolded is detected. For example, the specific application may include a paint application or a photo editor capable of editing a drawing or an image.

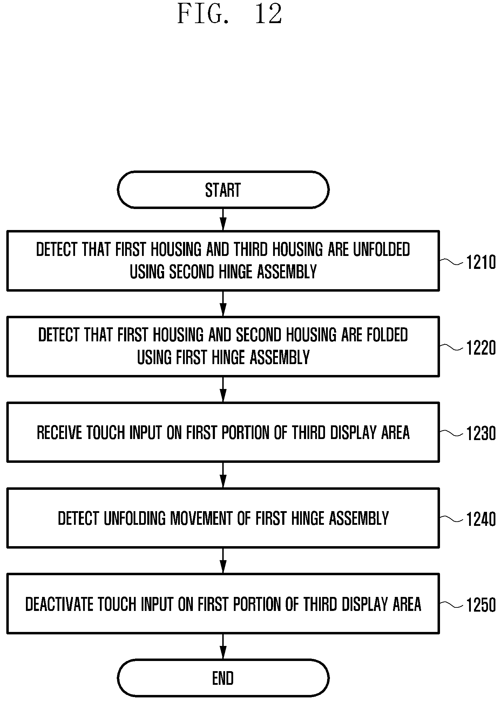

FIG. 12 is a flowchart illustrating a method for controlling a touch input of a multi-foldable electronic device according to an embodiment of the disclosure.

The method disclosed below may include, for example, the embodiments disclosed in FIGS. 1A to 11. The method disclosed below may be integrated into and applied to, for example, the embodiments disclosed in FIGS. 2A to 11. In embodiments related to the method described below, the operations may be performed sequentially, but are not necessarily performed sequentially. For example, an order of the operations may be changed. For example, the operations may be performed in parallel. For example, not all of the operations may be performed, and only at least some of the operations may be performed. The operations disclosed below may be performed by instructions stored in the processor 120 and/or the memory 130 of the multi-foldable electronic device 200.

In operation 1210, the multi-foldable electronic device 200 may detect that the first housing 210 and the third housing 230 are unfolded using the second hinge assembly 202 (e.g., about 180°), by using the first sensor 510 and/or the third sensor 530.

In operation 1220, the multi-foldable electronic device 200 may detect that the first housing 210 and the second housing 220 are folded using the first hinge assembly 201, by using the first sensor 510 and/or the second sensor 520.

In operation 1230, the multi-foldable electronic device 200 may receive a touch input on the first portion 801 of the third display area 240c of the flexible display 240, for the user to unfold the second housing 220 from the first housing 210. According to an embodiment, the multi-foldable electronic device 200 may detect that a touch input on the first portion 801 of the third display area 240c of the flexible display 240 is received, for unfolding the second housing 220 from the first housing 210 by the user.

In operation 1240, when there is a user's touch input on the first portion 801 of the third display area 240c, the multi-foldable electronic device 200 may detect an unfolding movement of the first hinge assembly 201. For example, the unfolding movement of the first hinge assembly 201 may include a movement in which the first housing 210 and the second housing 220 are unfolded to a designated angle.

In operation 1250, the multi-foldable electronic device 200 may, based on the unfolding movement of the first hinge assembly 201, deactivate sensing of the touch input on the first portion 801 of the third display area 240c.

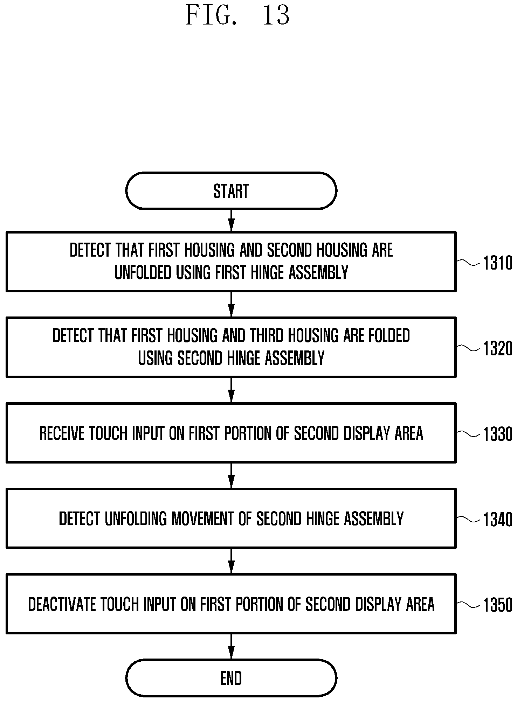

FIG. 13 is a flowchart illustrating a method for controlling a touch input of a multi-foldable electronic device according to various embodiments of the disclosure.

The method disclosed below may include, for example, the embodiments disclosed in FIGS. 1A to 12. The method disclosed below may be integrated into and applied to, for example, the embodiments disclosed in FIGS. 2A to 12. In embodiments related to the method described below, the operations may be performed sequentially, but are not necessarily performed sequentially. For example, an order of the operations may be changed. For example, the operations may be performed in parallel. For example, not all of the operations may be performed, and only at least some of the operations may be performed. The operations disclosed below may be performed by instructions stored in the processor 120 and/or the memory 130 of the multi-foldable electronic device 200.

In operation 1310, the multi-foldable electronic device 200 may detect that the first housing 210 and the second housing 220 are unfolded using the first hinge assembly 201 (e.g., about 180°), by using the first sensor 510 and/or the second sensor 520.

In operation 1320, the multi-foldable electronic device 200 may detect that the first housing 210 and the third housing 230 are folded using the second hinge assembly 202, by using the first sensor 510 and/or the third sensor 530.

In operation 1330, the multi-foldable electronic device 200 may detect whether there is a touch input on the first portion 1101 of the second display area 240b of the flexible display 240, for the user to unfold the third housing 230 from the first housing 210. For example, the multi-foldable electronic device 200 may receive a touch input on the first portion 1101 of the second display area 240b of the flexible display 240, for unfolding a third housing 230 from a first housing 210 by a user.

In operation 1340, when there is a user touch input on the first portion 1101 of the second display area 240b, the multi-foldable electronic device 200 may detect an unfolding movement of the second hinge assembly 202. For example, the unfolding movement of the second hinge assembly 202 may include a movement in which the first housing 210 and the third housing 230 are unfolded to a designated angle.

In operation 1350, the multi-foldable electronic device 200 may, based on the unfolding movement of the second hinge assembly 202, deactivate (e.g., ignore) sensing of the touch input on the first portion 1101 of the second display area 240b.

According to an embodiment of the disclosure, the multi-foldable electronic device 200 may include a first housing 210 including a first sensor 510, a second housing 220 foldably coupled to a first side of the first housing 210 and including a second sensor 520, a third housing 230 foldably coupled to a second side of the first housing 210 and including a third sensor 530, a first hinge assembly 201 coupled between the first housing 210 and the second housing 220, a second hinge assembly 202 coupled between the first housing 210 and the third housing 230, a flexible display 240 including a first display area 240a disposed on the first housing 210, a second display area 240b disposed on the second housing 220, and a third display area 240c disposed on a front surface of the third housing 230, a processor 120, and a memory 130 configured to store instructions.

According to an embodiment, when the first housing 210 and the third housing 230 are unfolded using the second hinge assembly 202, and the first housing 210 and the second housing 220 are folded using the first hinge assembly 201, the instructions, when executed by the processor 120, may cause the multi-foldable electronic device 200 to receive a touch input on a first portion 801 of the third display area 240c, detect an unfolding movement of the first hinge assembly 201 after receiving the touch input on the first portion 801, and deactivate sensing of the touch input on the first portion 801 of the third display area 240c based on the unfolding movement of the first hinge assembly 201.

According to an embodiment, the multi-foldable electronic device 200 may further include a sub-display 250 including a fourth display area 250d disposed on a rear surface of the third housing 230. According to an embodiment, the instructions, when executed by the processor 120, may cause the multi-foldable electronic device 200 to display an application execution screen 710 on the fourth display area 250d while the first housing 210, the second housing 220, and the third housing 230 are folded, and display the application execution screen 710 on the third display area 240c when the third housing 230 is unfolded from the first housing 210.

According to an embodiment, the multi-foldable electronic device 200 may further include a first grip sensor 272 disposed on the first housing 210, a second grip sensor 282 disposed on the second housing 220, and a third grip sensor 292 disposed on the third housing 230. According to an embodiment, the instructions, when executed by the processor 120, may cause the multi-foldable electronic device 200 to, upon reception of the touch input on the first portion 801 of the third display area 240c, detect whether at least one of the first housing 210, the second housing 220, and the third housing 230 is in a grip state by using at least one of the first grip sensor 272, the second grip sensor 282, and the third grip sensor 292, and deactivate sensing of the touch input on the first portion 801 based on that at least one of the first housing 210, the second housing 220, and the third housing 230 is in a grip state.

According to an embodiment, the instructions, when executed by the processor 120, may cause the multi-foldable electronic device 200 to deactivate sensing of the touch input on the first portion 801 of the third display area 240c when an unfolding movement of the first hinge assembly 201 is detected within a predetermined time after release of the touch input that is detected on the first portion 801 of the third display area 240c.

According to an embodiment, when the first housing 210 and the second housing 220 are unfolded using the first hinge assembly 201 and the first display area 240a is activated, the instructions, when executed by the processor 120, may cause the multi-foldable electronic device 200 to activate sensing of a touch input on the first portion 801 of the third display area 240c.

According to an embodiment, the deactivation of sensing of the touch input on the first portion 801 of the third display area 240c may include a state in which sensitivity is adjusted such that the touch input is ignored.

According to an embodiment, the first portion 801 of the third display area 240c may include an area overlapping at least a portion of the second hinge assembly 202.

According to an embodiment, when the first housing 210 and the third housing 230 are folded using the second hinge assembly 202 and the first housing 210 and the second housing 220 are unfolded using the first hinge assembly 201, the instructions, when executed by the processor 120, may cause the multi-foldable electronic device 200 to receive a touch input on a first portion 1101 of the second display area 240b, detect an unfolding movement of the second hinge assembly 202 after receiving the touch input on the first portion 1101, and deactivate sensing of the touch input on the first portion 1101 of the second display area 240b based on the unfolding movement of the second hinge assembly 202.

According to an embodiment, the first portion 1101 of the second display area 240b may include an area overlapping at least a portion of the first hinge assembly 201.

According to an embodiment, in a state in which the first housing 210 and the second housing 220 are unfolded using the first hinge assembly 201 and the first housing 210 and the third housing 230 are unfolded using the second hinge assembly 202, when the first housing 210 and the second housing 220 are folded using the first hinge assembly 201, the instructions, when executed by the processor 120, may cause the multi-foldable electronic device 200 to detect a folding movement of the first hinge assembly 201, receive a touch input on the first portion 801 of the third display area 240c, and deactivate sensing of the touch input on the first portion 801 of the third display area 240c based on the folding movement of the first hinge assembly 201.

According to an embodiment, the flexible display 240 and the sub-display 250 may include a touch circuit 168, and the deactivation of sensing of the touch input on the first portion 801 of the third display area 240c may include a state in which a touch input received through the touch circuit 168 is not transmitted to the processor 120 or a state in which the processor 120 ignores a touch input received through the touch circuit 168.

According to an embodiment, the first hinge assembly 201 may include a hinge that is folded in an in-folding manner, and the second hinge assembly 202 may include a hinge that is folded in an in-folding manner.

According to an embodiment, when the first housing 210 and the third housing 230 are unfolded using the second hinge assembly 202 and the first display area 240a is activated, the instructions, when executed by the processor 120, may cause the multi-foldable electronic device 200 to activate sensing of a touch input on the first portion 1101 of the second display area 240b.

According to an embodiment, when the first housing 210 and the second housing 220 are folded using the first hinge assembly 201 and the third display area 240c is activated, the instructions, when executed by the processor 120, may cause the multi-foldable electronic device 200 to activate sensing of a touch input on the first portion 801 of the third display area 240c.

A method of controlling a multi-foldable electronic device 200 including a first housing 210, a second housing 220, and a third housing 230 according to an embodiment of the disclosure may include detecting, by the multi-foldable electronic device 200 using a first sensor 510 and/or a third sensor 530, that the first housing 210 and the third housing 230 are unfolded using a second hinge assembly 202 (1210).

According to an embodiment, the method may include detecting, using the first sensor 510 and/or a second sensor 520, that the first housing 210 and the second housing 220 are folded using a first hinge assembly 201 (1220).

According to an embodiment, the method may include receiving a touch input on a first portion 801 of a third display area 240c of a flexible display 240 to unfold the second housing 220 from the first housing 210 (1230).

According to an embodiment, the method may include detecting an unfolding movement of the first hinge assembly 201 after receiving the touch input on the first portion 801 (1240).

According to an embodiment, the method may include deactivating sensing of the touch input on the first portion 801 of the third display area 240c based on the unfolding movement of the first hinge assembly 201 (1250).

According to an embodiment, the method may include displaying an application execution screen 710 on a fourth display area 250d disposed on a rear surface of the third housing 230 while the first housing 210, the second housing 220, and the third housing 230 are folded, and, when the third housing 230 is unfolded from the first housing 210, displaying the application execution screen 710 on the third display area 240c.

According to an embodiment, the method may include, when an unfolding movement of the first hinge assembly 201 is detected within a predetermined time after release of the touch input that is detected on the first portion 801 of the third display area 240c, deactivating sensing of the touch input on the first portion 801 of the third display area 240c.

According to an embodiment, when the first housing 210 and the second housing 220 are unfolded using the first hinge assembly 201 and the first display area 240a is activated, the method may include activating sensing of the touch input on the first portion 801 of the third display area 240c.

According to an embodiment, the deactivation of sensing of the touch input on the first portion 801 of the third display area 240c may include a state in which sensitivity is adjusted such that the touch input is ignored.

According to an embodiment, the first portion 801 of the third display area 240c may include an area overlapping at least a portion of the second hinge assembly 202.

Although the disclosure has been described with reference to various embodiments thereof, it will be apparent to those of ordinary skill in the art to which the disclosure pertains that various changes and modifications may be made without departing from the technical spirit of the disclosure, and such changes and modifications shall be construed as falling within the scope of the disclosure.

## Claims

1. A multi-foldable electronic device (200) comprising:
a first housing (210) comprising a first sensor (510);
a second housing (220) foldably coupled to a first side of the first housing (210) and comprising a second sensor (520);
a third housing (230) foldably coupled to a second side of the first housing (210) and comprising a third sensor (530);
a first hinge assembly (201) coupled between the first housing (210) and the second housing (220);
a second hinge assembly (202) coupled between the first housing (210) and the third housing (230);
a flexible display (240) comprising a first display area (240a) disposed on the first housing (210), a second display area (240b) disposed on the second housing (220), and a third display area (240c) disposed on a front surface of the third housing (230);
a processor (120); and
a memory (130) configured to store instructions,
wherein, in case that the first housing (210) and the third housing (230) are unfolded using the second hinge assembly (202) and the first housing (210) and the second housing (220) are folded using the first hinge assembly (201),
the instructions, when executed by the processor (120), cause the multi-foldable electronic device (200) to:
receive a touch input on a first portion (801) of the third display area (240c);
after receiving the touch input on the first portion (801), detect an unfolding movement of the first hinge assembly (201); and
based on the unfolding movement of the first hinge assembly (201), deactivate the touch input on the first portion (801) of the third display area (240c).

2. The multi-foldable electronic device of claim 1, further comprising a sub-display (250) comprising a fourth display area (250d) disposed on a rear surface of the third housing (230),
wherein the instructions, when executed by the processor (120), cause the multi-foldable electronic device (200) to:
display an application execution screen (710) on the fourth display area (250d) in a state where the first housing (210), the second housing (220), and the third housing (230) are folded; and
in case that the third housing (230) is unfolded from the first housing (210), display the application execution screen (710) on the third display area (240c).

3. The multi-foldable electronic device of claim 1 or 2, further comprising a first grip sensor (272) disposed in the first housing (210), a second grip sensor (282) disposed in the second housing (220), and a third grip sensor (292) disposed in the third housing (230),
wherein the instructions, when executed by the processor (120), cause the multi-foldable electronic device (200) to:
upon receiving the touch input on the first portion (801) of the third display area (240c), detect whether at least one of the first housing (210), the second housing (220), and the third housing (230) is in a grip state by using at least one of the first grip sensor (272), the second grip sensor (282), and the third grip sensor (292); and
based on that at least one of the first housing (210), the second housing (220), and the third housing (230) is in a grip state, deactivate the touch input on the first portion (801).

4. The multi-foldable electronic device of one of claims 1 to 3, wherein the instructions, when executed by the processor (120), cause the multi-foldable electronic device (200) to deactivate the touch input on the first portion (801) of the third display area (240c) in case that an unfolding movement of the first hinge assembly (201) is detected within a predetermined time after release of the touch input from a time point when the touch input on the first portion (801) of the third display area (240c) is detected.

5. The multi-foldable electronic device of one of claims 1 to 4, wherein, in case that the first housing (210) and the second housing (220) are unfolded using the first hinge assembly (201), and the first display area (240a) is activated,
the instructions, when executed by the processor (120), cause the multi-foldable electronic device (200) to activate the touch input on the first portion (801) of the third display area (240c).

6. The multi-foldable electronic device of one of claims 1 to 5, wherein the deactivation of the touch input on the first portion (801) of the third display area (240c) corresponds to a state in which sensitivity is adjusted such that the touch input is ignored.

7. The multi-foldable electronic device of one of claims 1 to 6, wherein the first portion (801) of the third display area (240c) is an area that overlaps at least a portion of the second hinge assembly (202).

8. The multi-foldable electronic device of one of claims 1 to 7, wherein, in case that the first housing (210) and the third housing (230) are folded using the second hinge assembly (202), and the first housing (210) and the second housing (220) are unfolded using the first hinge assembly (201),
the instructions, when executed by the processor (120), cause the multi-foldable electronic device (200) to:
receive a touch input on a first portion (1101) of the second display area (240b);
after receiving the touch input on the first portion (1101), detect an unfolding movement of the second hinge assembly (202); and
based on the unfolding movement of the second hinge assembly (202), deactivate the touch input on the first portion (1101) of the second display area (240b).

9. The multi-foldable electronic device of one of claims 1 to 8, wherein the first portion (1101) of the second display area (240b) is an area that overlaps at least a portion of the first hinge assembly (201).

10. The multi-foldable electronic device of one of claims 1 to 9, wherein, in a state in which the first housing (210) and the second housing (220) are unfolded using the first hinge assembly (201) and the first housing (210) and the third housing (230) are unfolded using the second hinge assembly (202), in case that the first housing (210) and the second housing (220) are folded using the first hinge assembly (201),
the instructions, when executed by the processor (120), cause the multi-foldable electronic device (200) to:
detect a folding movement of the first hinge assembly (201);
receive a touch input on the first portion (801) of the third display area (240c); and
based on the folding movement of the first hinge assembly (201), deactivate sensing of the touch input on the first portion (801) of the third display area (240c).

11. The multi-foldable electronic device of claim 2, wherein the flexible display (240) and the sub-display (250) comprise a touch circuit (168), and
wherein the deactivation of the touch input on the first portion (801) of the third display area (240c) corresponds to a state in which a touch input received through the touch circuit (168) is not transmitted to the processor (120) or a state in which the processor (120) ignores a touch input received through the touch circuit (168).

12. The multi-foldable electronic device of one of claims 1 to 11, wherein the first hinge assembly (201) comprises a hinge that is folded in an in-folding manner, and
wherein the second hinge assembly (202) comprises a hinge that is folded in an in-folding manner.

13. The multi-foldable electronic device of claim 8, wherein, in case that the first housing (210) and the third housing (230) are unfolded using the second hinge assembly (202), and the first display area (240a) is activated,
the instructions, when executed by the processor (120), cause the multi-foldable electronic device (200) to activate the touch input on the first portion (1101) of the second display area (240b).

14. The multi-foldable electronic device of claim 10, wherein, in case that the first housing (210) and the second housing (220) are folded using the first hinge assembly (201), and the third display area (240c) is activated,
the instructions, when executed by the processor (120), cause the multi-foldable electronic device (200) to activate the touch input on the first portion (801) of the third display area (240c).

15. A method for controlling a multi-foldable electronic device (200) comprising a first housing (210), a second housing (220), and a third housing (230), the method comprising:
detecting, using a first sensor (510) and/or a third sensor (530), that the first housing (210) and the third housing (230) are unfolded using a second hinge assembly (202) (1210);
detecting, using the first sensor (510) and/or a second sensor (520), that the first housing (210) and the second housing (220) are folded using a first hinge assembly (201) (1220);
receiving a touch input on a first portion (801) of a third display area (240c) of a flexible display (240) to unfold the second housing (220) from the first housing (210) (1230);
after receiving the touch input on the first portion (801), detecting an unfolding movement of the first hinge assembly (201) (1240); and
based on the unfolding movement of the first hinge assembly (201), deactivating the touch input on the first portion (801) of the third display area (240c) (1250).
